# EUROPEAN PATENT APPLICATION

(11) **EP 4 632 423 A1**
(43) Date of publication of application: **15.10.2025**
(21) Application number: 23900318.9
(22) Date of filing: 17.10.2023
(51) Int. Cl.: G01S 5/02, G01S 5/14, G01S 13/76, G01S 13/84, H04W 52/02

(54) **POSITION ASSESSMENT DEVICE, POSITION ASSESSMENT SYSTEM, WIRELESS COMMUNICATION MODULE, AND COMPUTER PROGRAM**

(30) Priority: 09.12.2022 JP 2022197267
(71) Applicant: DENSO CORPORATION, Aichi-pref., 448-8661 (JP)
(72) Inventor: KAKUYA Yuuji, Kariya- city, Aichi-pref., 448-8661 (JP); MORITOH Shingo, Kariya- city, Aichi-pref., 448-8661 (JP); SAIKI Takashi, Kariya- city, Aichi-pref., 448-8661 (JP); NAKANO Yuichiro, Kariya- city, Aichi-pref., 448-8661 (JP); TAKASHIMA Kei, Kariya- city, Aichi-pref., 448-8661 (JP); NARUSE Kouhei, Kariya- city, Aichi-pref., 448-8661 (JP); OKABE Nobuyasu, Kariya- city, Aichi-pref., 448-8661 (JP); NAKAKURA Yohei, Kariya- city, Aichi-pref., 448-8661 (JP)
(74) Representative: Winter, Brandl - Partnerschaft mbB
(86) International application number: PCT/JP2023/037569
(87) International publication number: WO 2024/122196

(57) **Abstract**

A DK-ECU, which is provided as a position determination device, includes a main controller (11) and a BLE module (12). In response to a vehicle being parked, the main controller (11) enters a power saving mode (power off/sleep). The BLE module (12) maintains a state of being communicably connectable to a portable device (9) even during parking. When the BLE module (12) is communicably connected to the portable device (9), the BLE module (12) periodically executes a CS distance measurement process for calculating a distance based on reception phase data for each frequency acquired by sequentially transmitting and receiving continuous wave signals of different frequencies to and from the portable device (9). The BLE module (12) activates the main controller (11) when the first distance calculated by the CS distance measurement process is less than a predetermined value.

## Description

### CROSS REFERENCE TO RELATED APPLICATION

This application is based on Japanese Patent Application No. 2022-197267 filed on December 9, 2022, the disclosure of which is incorporated herein by reference.

### TECHNICAL FIELD

The present disclosure relates to a technique for determining a position of a portable device relative to a vehicle by wireless communication between the vehicle and the portable device.

### BACKGROUND ART

Patent Literature 1 discloses an in-vehicle system including one master device and multiple slave devices. The master device detects that a portable device is present around a vehicle based on received signal strength of a signal emitted from the portable device, and activates the slave devices. The master device and the slave devices are communication devices that perform wireless communication with the portable device.

### PRIOR ART LITERATURE

### PATENT LITERATURE

Patent Literature 1: JP 2016-171401 A

### SUMMARY

In the configuration disclosed in Patent Literature 1, until the communication module serving as the master device detects the portable device, the communication module serving as the slave device is not activated, and deactivated state is maintained. Therefore, an effect of suppressing power consumption during standby (for example, during parking state) can be expected. Based on the above configuration, the developers of the present disclosure have studied a configuration in which the master device returns (that is, activates) the target device from the power saving mode to the normal mode in response to the received signal strength of the signal from the portable device being equal to or greater than a predetermined value. The target device is not limited to the slave device, and may be any device.

When the developers of the present disclosure verified the operation of a configuration adopting a communication module that performs communication conforming to Bluetooth (registered trademark) Low Energy (hereinafter, also referred to as BLE) as a master device, the following problem was found. In the above configuration, the problem has been found that even when the portable device is 10 meters or more away from the vehicle, the master device detects the portable device and activates the target device. The reason for this is considered to be that the radio wave used in the BLE has a frequency of 1 GHz or higher, and thus has strong rectilinearity, and the received signal strength tends to vary due to multipath or the like.

As described above, when the target device is activated on condition that the received signal strength of the signal from the portable device is equal to or greater than the predetermined value, the target device may be unnecessarily activated even though the target device does not actually exist near the vehicle. In addition, unnecessary activation of the target device leads to an increase in standby power consumption. The target device may be various devices/modules such as a computer, a communication module, and a circuit module.

The present disclosure has been made based on the above examination or focus, and an object of the present disclosure is to provide a position determination device, a position determination system, a wireless communication module, and a computer program, each of which is capable of reducing standby power consumption.

According to an aspect of the present disclosure, a position determination device determines a position of a portable device relative to a vehicle. The position determination device includes a first communication unit that performs wireless communication conforming to Bluetooth with the portable device and a computer that executes a process of determining the position of the portable device. The computer has, as operation states, a normal mode and a power saving mode. The first communication unit is set to maintain a communicable state with the portable device even while the computer operates in the power saving mode. The first communication unit executes a first distance measurement process of calculating a first distance, which is a distance from the first communication unit to the portable device, using data related to a reception phase, a flight time, or an arrival time of a wireless signal transmitted from the portable device. The first communication unit compares the first distance obtained as a result of the first distance measurement process with a predetermined value and outputs a comparison result. The computer switches from the power saving mode to the normal mode based on the comparison result.

In the above configuration, as a condition for returning the computer to the normal mode, the determined first distance being less than the predetermined value is adopted. The first distance is determined based on the parameter corresponding to the propagation time of the signal, such as the reception phase or the arrival time of the wireless signal transmitted from the portable device. Such a first distance has a smaller distance measurement error due to the communication environment, compared with the received signal strength. Therefore, according to the above configuration, it is possible to reduce the possibility of activating the computer in a case where the computer does not need to be activated, such as when the portable device is away from the vehicle. Accordingly, power consumption during standby state can also be reduced.

According to another aspect of the present disclosure, a position determination system includes a first communication unit that performs wireless communication conforming to Bluetooth with a portable device and a computer that executes a process of determining a position of the portable device. The computer has, as operation states, a normal mode and a power saving mode. The first communication unit executes a first distance measurement process of calculating a first distance, which is a distance from the first communication unit to the portable device, using a reception phase, a flight time, or an arrival time of a wireless signal transmitted from the portable device in a case where the computer operates in the power saving mode. The first communication unit compares the first distance obtained as a result of the first distance measurement process with a predetermined value and outputs a comparison result. The computer switches from the power saving mode to the normal mode based on the comparison result.

The above-described position determination system has similar configuration to the above-described position determination device. Thus, according to the position determination system, power consumption during standby state can be reduced.

According to another aspect of the present disclosure, a wireless communication module performs wireless communication conforming to Bluetooth with a portable device. The wireless communication module includes an antenna for communicating with the portable device and a communication controller acquiring data related to a reception phase, a flight time, or an arrival time of a wireless signal transmitted from the portable device based on a signal received by the antenna. The communication controller maintains a communicable state with the portable device while a vehicle is in a parked state using power supplied from a battery mounted on the vehicle. While the vehicle is in the parked state, the communication controller executes a first distance measurement process of calculating a first distance, which is a distance from the communication controller to the portable device, using the data related to the reception phase, the flight time, or the arrival time of the wireless signal. The communication controller compares the first distance obtained as a result of the first distance measurement process with a predetermined value and outputs a comparison result. The communicant controller outputs a signal for switching a predetermined target device mounted on the vehicle from a power saving mode to a normal mode based on the comparison result.

According to the above-described wireless communication module, power consumption during standby state can be reduced for the same reason as the above-described position determination device.

According to another aspect of the present disclosure, a computer program includes instructions to be executed by a processor of a portable device. The portable device includes a Bluetooth communication unit for performing wireless communication conforming to Bluetooth and a UWB communication unit for performing ultra-wideband (UWB) communication. The instructions of the computer program includes: establishing a Bluetooth communication connection with a vehicle in response to receiving a signal transmitted from the vehicle, wherein the vehicle is associated with the portable device in advance; in response to receiving a start request of a first distance measurement process from the vehicle, returning a signal for the first distance measurement process to the vehicle, wherein the first distance measurement process is a distance measurement process using Bluetooth communication; sequentially transmitting, to the vehicle, continuous wave signals having different frequencies after returning the signal for the first distance measurement process; activating the UWB communication unit in response to receiving a start request of a second distance measurement process from the vehicle, wherein the second distance measurement process is a distance measurement process using UWB communication; and in response to receiving a UWB signal for distance measurement purpose from the vehicle, returning a UWB signal having a predetermined pattern to the vehicle.

The computer program causes a normal device to function as the portable device that responds to the position determination device or the position determination system. According to the computer program, the operation of UWB communication unit can be stopped in the portable device when the start request for the second distance measurement process is not received from the vehicle. Thus, the standby power consumption can be reduced.

The reference numerals in parentheses included in the claims indicate the correspondence with specific means described in the embodiments that will be discussed later as one of the aspects, and they do not limit the technical scope of the present disclosure.

### BRIEF DESCRIPTION OF DRAWINGS

FIG. 1 is a view showing an overall image of a vehicle electronic key system.
FIG. 2 is a block diagram illustrating a configuration of a portable device.
FIG. 3 is a block diagram illustrating a configuration of a DK-ECU.
FIG. 4 is a block diagram illustrating a configuration of a BLE module.
FIG. 5 is a diagram schematically illustrating a flow of the CS distance measurement process.
FIG. 6 is a functional block diagram of a main controller.
FIG. 7 is a flowchart for describing the operation of the DK-ECU when the main controller is in the power saving mode.
FIG. 8 is a flowchart for describing the operation of the DK-ECU when the main controller is in the normal mode.
FIG. 9 is a flowchart for describing the operation of the DK-ECU responding to the approach of the user to the vehicle.
FIG. 10 is a flowchart illustrating another operation example of the DK-ECU after activation of the main controller.
FIG. 11 is a flowchart illustrating an operation of the main controller in a case where an UWB module to be used for next position determination is selected according to a determination result of a device position.
FIG. 12 is a diagram for describing an example of an unnecessary anchor according to a device position.
FIG. 13 is a flowchart illustrating another operation example of the BLE controller in a situation where the main controller is in the power saving mode.
FIG. 14 is a flowchart illustrating another operation example of the BLE controller in a situation where the main controller is in the power saving mode.
FIG. 15 is a flowchart illustrating another operation example of the BLE controller in a situation where the main controller is in the power saving mode.
FIG. 16 is a diagram for describing operations of the in-vehicle system and the portable device in a first standby state.
FIG. 17 is a diagram for describing operations of the in-vehicle system and the portable device in a second standby state.
FIG. 18 is a diagram for describing operations of the in-vehicle system and the portable device in a third standby state.
FIG. 19 is a diagram for describing operations of the in-vehicle system and the portable device in the position determination state.
FIG. 20 is a block diagram illustrating another configuration example of the in-vehicle system.
FIG. 21 is a block diagram illustrating another configuration example of the in-vehicle system.

### DESCRIPTION OF EMBODIMENTS

Hereinafter, an embodiment of a vehicle electronic key system to which the present disclosure is applied will be described with reference to the drawings. The present disclosure is not limited to the following embodiments, and various modifications described below are also included in the technical scope of the present disclosure. Furthermore, other than the following, various modifications can be made without departing from the gist. Various supplements, modifications, and the like can be appropriately combined and implemented within a range in which no technical contradiction occurs. Members having the same function are denoted by the same reference numerals, and the description thereof may be omitted. In addition, in a case where only part of the configuration is referred to, the description described in other portions can be applied to other portions.

### (Overall configuration)

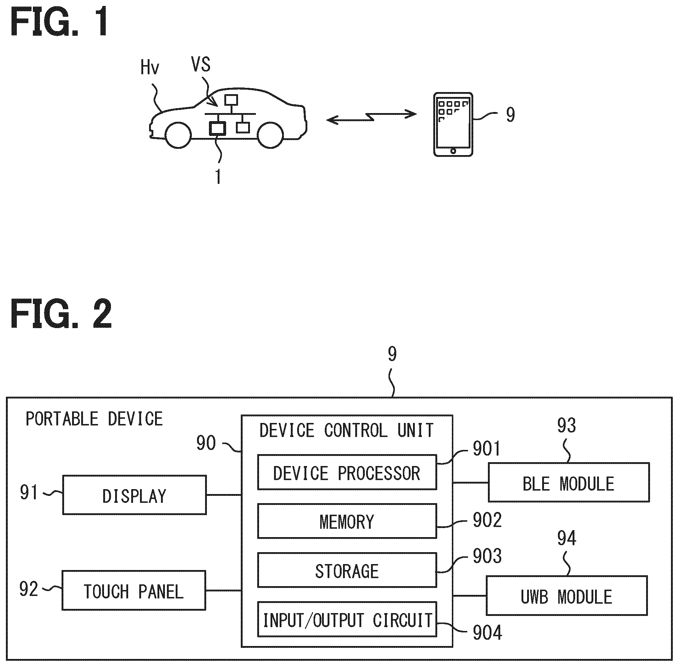

As illustrated in FIG. 1, the vehicle electronic key system according to the present embodiment includes an in-vehicle system VS and a portable device 9. The in-vehicle system VS includes a digital key electronic control unit (hereinafter, referred to as DK-ECU) 1. The ECU is an abbreviation for electronic control unit, and means an electronic control device. The DK is an abbreviation for a digital key.

The DK-ECU 1 is configured to be able to perform wireless communication (hereinafter, BLE communication) conforming to Bluetooth (registered trademark) Low Energy with the portable device 9 carried by a user of a vehicle Hv. Hereinafter, a case where the DK-ECU 1 is set to behave as a master in data communication with the portable device 9 and the portable device 9 is set to behave as a slave will be described. The description of "master" can be read as "central" or "scanner". The description of "slave" can be read as a peripheral or an advertiser.

The DK-ECU 1 receives the advertisement signal from the portable device 9 to establish communication connection with the portable device 9. The advertisement signal is a BLE signal for notifying (that is, advertising) another device of its own presence. The BLE signal is a wireless signal conforming to BLE. The BLE signal may include a code indicating a transmission source or a destination. The transmission source and the destination can be expressed by a device ID or the like. Of course, as another aspect, in the vehicle electronic key system, the portable device 9 may operate as a master in communication with the DK-ECU 1, and the DK-ECU 1 may be set to behave as a slave. The role of each device can be interchanged. In addition, the function and configuration of each of the DK-ECU 1 and the portable device 9 can also be appropriately changed in accordance with the replacement of the role.

In the present disclosure, a wireless signal conforming to the BLE standard is referred to as a BLE signal. In addition, among the BLE signals, a signal of an advertisement channel may be described as an advertisement signal, and a signal of a data channel may also be described as a data signal. Among the 40 channels, a channel with a channel number of 37 to 39 corresponds to the advertisement channel. In addition, a channel with a channel number of 0 to 36 corresponds to a data channel. Definitions and specific frequency values of the advertisement channel and the data channel are decided according to the BLE standard. In addition, according to the change in the BLE standard, the configuration of the present disclosure may be appropriately changed and implemented so as to conform to the changed standard.

In addition, the in-vehicle system VS and the portable device 9 are configured to be able to perform UWB communication which is wireless communication of an ultra wideband-impulse radio (UWB-IR) system. That is, the in-vehicle system VS and the portable device 9 are configured to be able to transmit and receive an impulse radio wave (hereinafter, the impulse signal) used in UWB communication. The impulse signal used in the UWB communication is a signal having a pulse width of an extremely short time (for example, 2 ns) and a bandwidth of 500 MHz (strictly, 499.2 MHz) or more (that is, an ultra-wide bandwidth).

In UWB communication, multiple channels can be used as defined in IEEE802.15.4z. Hereinafter, as an example, the in-vehicle system VS is configured to communicate with the portable device 9 using the fifth channel of UWB communication. Of course, the in-vehicle system VS may be configured to be able to communicate with the portable device 9 using other channels such as the third channel and the ninth channel. The third channel is a channel having a center frequency of 4492 MHz, and the fifth channel is a channel having a center frequency of 6489.6 MHz. The ninth channel is a channel having a center frequency of 7987.2 MHz. IEEE (registered trademark) is an abbreviation for Institute of Electrical and Electronics Engineers, and means the Institute of Electrical and Electronics Engineers. Each channel corresponds to a frequency band of ±250 MHz from the center frequency. In UWB communication, frequencies such as 3.1 GHz to 4.8 GHz, 6.0 GHz to 10.6 GHz, and the like may be used.

The modulation method of the UWB communication may be an on off keying (OOK) method, a pulse position modulation (PPM) method, a pulse width modulation (PWM) method, or the like. The modulation method may be MB-OFDM or DS-UWB. The ON/OFF modulation method is a method of expressing information by presence/absence of an impulse signal. The pulse position modulation method is a method of performing modulation at a pulse generation position. The pulse width modulation method is a method of expressing information by a pulse width. As an example, UWB communication between the in-vehicle system VS and the portable device 9 is performed by the OOK method. Data transmission by UWB communication is implemented by using multiple impulse signals. Hereinafter, a data signal exchanged in UWB communication is referred to as an UWB signal. Since the UWB signal includes multiple impulses, the UWB signal can also be referred to as a pulse sequence signal.

### (Portable device 9)

The portable device 9 is a portable and general-purpose information processing terminal having a BLE communication function. The portable device 9 may be any communication terminal such as a smartphone or a wearable device. The wearable device is a device used by being worn on the body of the user. The wearable device may have various shapes such as a wristband type, a wristwatch type, a ring type, a glasses type, and an earphone type. The portable device 9 may also be referred to as a user device, a key device, or the like.

The portable device 9 may be a smart key that is a dedicated device as an electronic key of the vehicle Hv. The smart key is a device that is transferred to the owner together with the vehicle Hv when the vehicle Hv is purchased. The smart key can be understood as one of the appendages of the vehicle Hv. The smart key may have various shapes such as a flat rectangular parallelepiped shape, a flat elliptical shape (so-called fob type), and a card type. The smart key may be referred to as a portable device for a vehicle, a key fob, a key card, an access key, or the like.

As illustrated in FIG. 2, the portable device 9 includes a device control unit 90, a display 91, a touch panel 92, a BLE module 93, and a UWB module 94.

The device control unit 90 is a module that controls the entire operation of the portable device 9. The device control unit 90 is configured as a computer including a device processor 901, a memory 902, a storage 903, and an input/output circuit 904. The device processor 901 may be a central processing unit (CPU). The memory 902 is a volatile storage medium such as a random access memory (RAM). The storage 903 includes a nonvolatile storage medium such as a flash memory.

The storage 903 may store the device ID and the key code used in the wireless authentication process with the DK-ECU 1. The key code may also be referred to as an encryption key or the like. A digital key application, which is application software for causing the portable device 9 to function as a vehicle key, may be installed in the storage 903. The digital key application is an application for performing secure communication with the DK-ECU 1 and responding to an inquiry/request from the DK-ECU 1. In the present disclosure, application software may be simply referred to as an application.

The display 91 may be a liquid crystal display, an organic EL display, or the like. The display 91 displays an image according to an input signal from the device control unit 90. The touch panel 92 is a capacitive touch panel, and is stacked on the display 91. The touch panel 92 is an input device included in the portable device 9. The touch panel 92 and the display 91 correspond to an interface for the user to input a password for logging in to the digital key application to the portable device 9 and pair the portable device 9 and the DK-ECU 1.

The BLE module 93 is a communication module for performing BLE communication. The BLE module 93 includes a strength detection unit that is a functional unit that measures the received signal strength of a received signal. The measurement value of the received signal strength may also be referred to as a received signal strength indicator/indication (RSSI). In addition to the received data, the BLE module 93 transmits data indicating the measured received signal strength to the device control unit 90 together with transmission source information.

Further, the BLE module 93 is configured to be able to transmit and receive a continuous wave (CW) signal having a predetermined waveform as a channel sounding (CS) distance measurement signal to be described later, in addition to a modulation signal for data communication. The CW signal may be a sine wave or a triangular wave. The BLE module 93 can have a configuration similar to that of a BLE module 12 included in the in-vehicle system VS. Some or all of the description of the BLE module 93 can be incorporated into the BLE module 12. The BLE module 93 corresponds to a Bluetooth communication unit.

The UWB module 94 is a communication module for performing UWB communication. The UWB module 94 outputs the received data to the device control unit 90. In addition, the UWB module 94 transmits an UWB signal corresponding to the transmission data based on an instruction from the device control unit 90. The UWB module 94 may transmit a single impulse signal as a distance measurement UWB signal based on an instruction from the device control unit 90. The operation of the UWB module 94 is controlled by the device control unit 90. The UWB module 94 corresponds to a UWB communication unit.

The device control unit 90 causes the BLE module 93 to transmit the advertisement signal at predetermined transmission intervals. In addition, the BLE module 93 performs communication connection processing with the DK-ECU 1 based on receiving a connection request from the DK-ECU 1. When receiving the BLE signal transmitted from the vehicle Hv, the device control unit 90 returns a response signal corresponding to the received signal. The device control unit 90 may perform an authentication process (thereafter, wireless authentication process) by wireless communication based on the establishment of the communication connection with the DK-ECU 1. The wireless authentication process may be performed by a challengeresponse method. When receiving the challenge code from the DK-ECU 1, the device control unit 90 may generate a response code using the key code and return the response code to the DK-ECU 1.

The device control unit 90 executes distance measurement communication based on a request from the DK-ECU 1. The portable device 9 causes the BLE module 93 to transmit the CW signal of the designated channel based on the request from the DK-ECU 1. The interaction between the portable device 9 and the DK-ECU 1 (actually, the DK-ECU 1) will be separately described later.

When receiving the UWB signal transmitted from the in-vehicle system VS, the portable device 9 returns a response signal corresponding to the received signal. Upon receiving the UWB signal as the search signal, the portable device 9 returns, as a response signal, the UWB signal obtained by modulating the code including its own device ID to the in-vehicle system VS. The search signal is a signal for the in-vehicle system VS to search for the portable device 9, and is a type of signal requesting the portable device 9 to return a response signal. The UWB signal transmitted by the portable device 9 and the in-vehicle system VS may include a code indicating a transmission source or a destination.

The device control unit 90 maintains the standby state with respect to the BLE module 93 even in a case where the communication connection with the DK-ECU 1 is not established. The standby state is a state in which the advertisement signal is periodically transmitted at a predetermined advertisement interval. The standby state corresponds to a state in which an advertisement state in which an advertisement signal is being transmitted and a standby state in which an advertisement signal is not being transmitted are repeated.

On the other hand, when the BLE link with the DK-ECU 1 is not established, the device control unit 90 stops the UWB module 94. The device control unit 90 activates the UWB module 94 based on the establishment of the BLE link with the DK-ECU 1. With this configuration, power consumption during standby is reduced.

The device control unit 90 may be configured to activate the UWB module 94 on condition that the UWB distance measurement start request is received from the DK-ECU 1 by BLE after the BLE communication connection with the DK-ECU 1. The UWB distance measurement start request is a BLE signal that requests to start the UWB distance measurement process. The UWB module 94 often has higher power consumption than the BLE module 93. Therefore, by reducing the time during which the UWB module 94 is activated, a further power saving effect can be expected.

### (In-vehicle system)

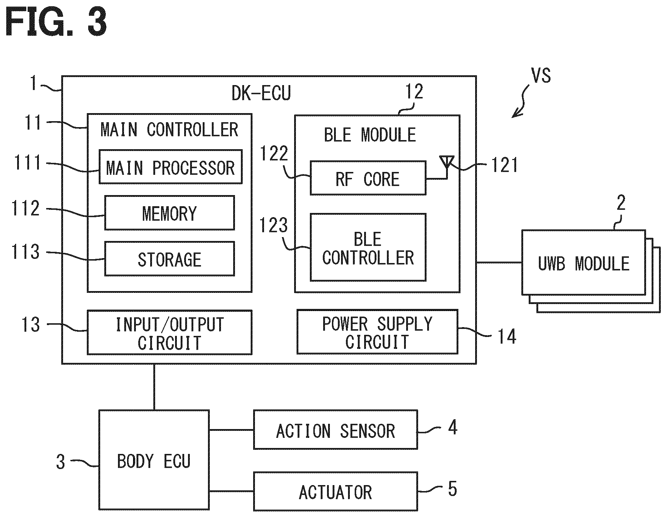

As illustrated in FIG. 3, the in-vehicle system VS includes the DK-ECU 1, multiple UWB modules 2, a body ECU 3, an action sensor 4, and an actuator 5. The DK-ECU 1 is individually connected to each of the plurality of UWB modules 2 by a cable. The DK-ECU 1 is also inter-communicably connected to the body ECU 3 via a dedicated communication cable or an in-vehicle network. The in-vehicle network is a communication network constructed in the vehicle Hv. The in-vehicle network standard may be any standard such as a controller area network (CAN: registered trademark), Ethernet (registered trademark), or FlexRay (registered trademark). The body ECU 3 is connected to the action sensor 4 and the actuator 5. Of course, the connection form between the devices disclosed herein is an example and can be changed as appropriate.

The DK-ECU 1 is an ECU that determines a device position in cooperation with the UWB module 2. The device position in the present disclosure means a relative position of the portable device 9 with respect to the vehicle Hv. The DK-ECU 1 determines whether the portable device 9 is present in the vehicle based on the communication status between the plurality of UWB modules 2 and the portable device 9. The DK-ECU 1 corresponds to a position determination device. Since the portable device 9 corresponds to the user, determining the device position corresponds to determining the position of the user.

The DK-ECU 1 may be disposed in an instrument panel of the vehicle. The DK-ECU 1 may be attached to an overhead console, a right or left C pillar, a place under a driver's seat, or the like. The C pillar means the third pillar from the front among the pillars of the vehicle Hv.

As illustrated in FIG. 3, the DK-ECU 1 includes a main controller 11, a BLE module 12, an input/output circuit 13, and a power supply circuit 14. The main controller 11 is a computer that executes various processes related to the determination of the device position. The main controller 11 includes a main processor 111, a memory 112, and a storage 113. The main processor 111 may be a CPU. The main processor 111 may be referred to as an ECU processor or the like. The memory 112 is a volatile storage medium such as a RAM.

The storage 113 includes a nonvolatile storage medium such as a flash memory. The storage 113 stores a device position determination program executed by the main processor 111. Execution of the device position determination program by the main processor 111 corresponds to execution of a position determination method corresponding to the device position determination program. The device ID of the portable device 9 is registered in the storage 113. In addition, the storage 113 stores data indicating the mounting position of each UWB module 2 in the vehicle Hv.

The main controller 11 includes a normal mode and a power saving mode as a power supply state, in other words, an operation mode (in other words, a state). The normal mode means a state in which power is supplied to the main controller 11 and various processes such as position determination can be executed. The power saving mode may be a so-called power-off state in which power supply to the main controller 11 is completely cut off.

The power saving mode may be a sleep mode or a pause mode. The sleep mode means a state in which power supply to the main processor 111 is stopped in a state in which data being operated, in other words, an execution state of a program is stored in a volatile memory such as a RAM. The pause state means a state in which power supply to the main processor 111 and the memory 112 is stopped in a state in which the execution state of the program is stored in a writable nonvolatile memory such as a flash memory. The power saving mode is a state in which the operation is stopped in an aspect, and thus may be rephrased as a stop mode.

In addition, the power saving mode may be an operation mode in which the power saving mode is intermittently activated at a low frequency such as once every 10 seconds, 1 minute, or 10 minutes to communicate with the body ECU 3 or the external server. Furthermore, the power saving mode may be a state in which functions are limited as compared with the normal mode, in other words, an operation mode in which only some functions can be executed. In the power saving mode, the position determination function may be stopped, and the authentication function by a backup method may be maintained. The backup method may be provided by a transponder communication, near field communication (NFC), or the like. The main controller 11 corresponds to a computer. Details of the main controller 11 will be separately described later.

The BLE module 12 is a communication module for performing BLE communication. As in the BLE module 93 included in the portable device 9, the BLE module 12 is configured to be able to transmit and receive a CW signal for each channel as a CS distance measurement signal in addition to a modulation signal for data communication. The power of the in-vehicle battery is supplied to the BLE module 12 even while the traveling power supply is set to OFF. The BLE module 12 is in a standby state constantly or intermittently even while the vehicle Hv is parked using the power supplied from the in-vehicle battery.

The BLE module 12 periodically performs scanning even while the main controller 11 is in the power saving mode, and attempts connection with the portable device 9. In addition, the BLE module 12 executes the CS distance measurement process described later based on communication connection with the portable device 9. In the present disclosure, the BLE module that maintains a state in which a signal from the portable device 9 can be received even while the main controller 11 is in the power saving mode is referred to as a gateway module. The gateway module can also be understood as a BLE module that is responsible for activating the main controller 11 based on the communication status with the portable device 9. The communication status mainly includes a device distance and/or received signal strength obtained as a result of CS distance measurement. The device distance is a distance from a communication module mounted on the vehicle Hv, such as the BLE module 12 or the UWB module 2, to the portable device 9. The gateway module can also be understood as a BLE module in communication connection with the portable device 9. Details of the BLE module 12 will be separately described later. The BLE module 12 corresponds to a wireless communication module and a first communication unit.

The input/output circuit 13 is a circuit module for the DK-ECU 1 to communicate with another device such as the body ECU 3. The input/output circuit 13 may include an analog circuit element, an IC, a PHY chip conforming to a communication standard of an in-vehicle network, and the like. The input/output circuit may include a chip set that converts a logic signal into an actual electrical signal in an interface such as CAN, Ethernet (registered trademark), or UART.

The power supply circuit 14 is a circuit module that supplies power to each of the main controller 11, the BLE module 12, and the input/output circuit 13. The power supply circuit 14 converts a voltage (for example, a battery voltage) input from the power supply cable into a voltage suitable for the operation of each of the main controller 11, the BLE module 12, and the input/output circuit 13 to output the voltage to each unit.

The power supply circuit 14 may have a function of switching the power supply of the DK-ECU 1 from the off state to the on state based on the input of the predetermined activation signal from the BLE module 12. The power-off state of the DK-ECU 1 corresponds to a state in which power supply to components other than the power supply circuit 14 and the BLE module 12 is stopped. The power-on state of the DK-ECU 1 corresponds to a state in which the main controller 11 is operating in the normal mode. The main controller 11 switches to the power saving mode in cooperation with the power supply circuit 14 based on the setting of the traveling power supply from on to off.

The UWB module 2 is a communication module for performing UWB communication. As in the UWB module 94 included in the portable device 9, the UWB module 2 is also configured to be able to transmit and receive UWB signals. The UWB module 2 is a communication device used for determining the position of the portable device 9, and is also referred to as an anchor, a reference station, or the like. The UWB module 2 corresponds to a second communication unit.

The UWB module 2 includes an antenna for UWB communication, a transmission/reception circuit, a UWB controller, and the like. The transmission/reception circuit is a circuit that performs a signal process related to modulation and demodulation. The UWB controller is a microcomputer that controls the operation of the UWB module 2 and generates UWB distance measurement data described below.

The UWB module 2 performs the UWB distance measurement process based on an instruction from the DK-ECU 1. The UWB distance measurement process is a process of measuring the device distance based on the propagation time (in other words, flight time) of the radio wave from the UWB module 2 to the portable device 9. The UWB distance measurement process includes a process of transmitting a UWB signal of a predetermined pattern toward the portable device 9 and a process of receiving the UWB signal as a response signal from the portable device 9. The UWB signal exchanged between the UWB module 2 and the portable device 9 in the UWB distance measurement process may be a single impulse signal or a pulse sequence signal in which multiple impulse signals is disposed in a predetermined pattern. The UWB distance measurement process corresponds to a second distance measurement process.

The UWB controller measures a round trip time (RTT) which is an elapsed time from transmission of the UWB signal to reception of the response signal from the portable device 9, and calculates a device distance based on the RTT. The RTT corresponds to a round-trip flight time of the UWB signal. The RTT takes a value corresponding to the distance from the UWB module 2 to the portable device 9. The UWB controller of the present embodiment calculates the device distance by multiplying a half value of a value obtained by subtracting a predetermined correction value from the RTT by the propagation time of the radio wave. The correction value here is a parameter for offsetting the response processing time in the portable device 9, the delay time in the UWB module 2, and the like. A specific value of the correction value can be appropriately designed. The correction value may be 0.

In the present disclosure, the device distance calculated by the UWB distance measurement process is referred to as a second distance. The second distance can also be referred to as an UWB distance measurement value. The data indicating the second distance is UWB distance measurement data. When a response from the portable device 9 is not obtained in the UWB distance measurement process, the UWB module 2 adopts a value indicating that the measurement is impossible or a sufficiently large predetermined value as the second distance. The UWB module 2 transmits the generated UWB distance measurement data to the DK-ECU 1. Since the flight time corresponds to the distance, calculating the RTT substantially corresponds to calculating the distance from the UWB module 2 to the portable device 9. Therefore, the process of calculating the RTT and providing the RTT to the DK-ECU 1 is also included in the concept of the UWB distance measurement process (second distance measurement process). The process of converting the RTT into the distance may be performed by the main controller 11.

The UWB module 2 may generate position related data indicating a position/area where the portable device 9 can exist based on the second distance and its own installation position. The UWB module 2 may transmit the position related data to the DK-ECU 1 instead of/together with the UWB distance measurement data.

The in-vehicle system VS includes, as the UWB module 2, an in-vehicle anchor 2A, a right anchor 2B, a left anchor 2C, and a rear anchor 2D. The in-vehicle anchor 2A is the UWB module 2 disposed in the vehicle interior. The in-vehicle anchor 2A is disposed at any location in the vehicle, such as an instrument panel, an upper end portion of a windshield, or a central portion of an in-vehicle ceiling portion. The in-vehicle anchor 2A may be accommodated in the housing of the DK-ECU 1. The right anchor 2B, the left anchor 2C, and the rear anchor 2D are all UWB modules 2 disposed on the outer face portion of the vehicle Hv. The right anchor 2B is built in an outer door handle for the right front seat. The right front seat is a seat located right of the center console among the front seats. When the steering wheel is provided right of the instrument panel, the right front seat corresponds to the driver's seat. The right anchor 2B may be disposed on the right B pillar, the right side mirror, or the right side sill. The right anchor 2B can be referred to as a right-outdoor unit. The right anchor 2B corresponds to a right communication unit.

The left anchor 2C is built in an outer door handle for the left front seat. The left anchor 2C may be disposed on the left B pillar, the left side mirror, or the left side sill. The left anchor 2C can be referred to as a left outdoor unit. The left anchor 2C corresponds to a left communication unit. The rear anchor 2D is disposed near the rear bumper or the trunk door. The rear anchor 2D can be referred to as a rear outdoor unit. The right anchor 2B, the left anchor 2C, and the rear anchor 2D can be referred to as an outdoor unit or an outer anchor. The configurations and performances of the UWB modules 2 may be substantially the same.

Each UWB module 2 operates according to an instruction of the DK-ECU 1. Each UWB module 2 is activated based on an instruction from the DK-ECU 1, and performs the UWB distance measurement process. The state in which the UWB module 2 can communicate can be rephrased as an active state (active state), a wake state, or the like. The UWB module 2 that has executed the UWB distance measurement process stops the operation voluntarily or based on an instruction from the DK-ECU 1. The state in which the operation is stopped may be a power-off state or a state in which only some functions are active. The state in which the operation is stopped can be rephrased as a sleep state, an invalid state, or the like. Each UWB module 2 may be configured to voluntarily attempt the UWB distance measurement process at predetermined intervals. A configuration including the DK-ECU 1 and the UWB module 2 corresponds to a position determination system.

The body ECU 3 is an ECU that detects a user's operation (action) on the vehicle Hv based on an input signal from the action sensor 4 and operates the actuator 5 in accordance with the detected operation by the user. The action sensor 4 is a sensor that detects a user's action on the vehicle Hv. The action can also be rephrased as an operation or an instruction. Examples of the action on the vehicle Hv include a locking operation, an unlocking operation, seating, pressing of a start switch, stepping on a brake pedal, and the like. The action sensor 4 includes some or all of a door sensor provided on the outer door handle, a start switch, a brake pedal sensor, and a seating sensor. The unlocking operation is a user operation for unlocking the vehicle Hv. The locking operation is an operation for locking the vehicle Hv. The DK-ECU 1 can detect a touch operation on the door sensor as an unlocking operation/locking operation.

The door sensor is a sensor that detects a user operation for unlocking and locking the door of the vehicle Hv. The door sensor may be a touch sensor or a push switch. The start switch is a push switch for the user to switch on/off the traveling power supply. The start switch may also be referred to as a power switch.

The actuator 5 is some or all of a lock motor, a headlight, a welcome lamp, and the like. The lock motor is a motor that switches between locking and unlocking of the door. The welcome lamp is an in-vehicle lighting facility that illuminates a road surface or the like near a door. The welcome lamp is disposed on a side mirror, a side sill, a lower end portion of a door panel, or the like.

The body ECU 3 transmits an event occurrence notification signal to the DK-ECU 1 when detecting a predetermined determination event, such as an unlocking operation, in which the position of the portable device 9 is required to be determined. The DK-ECU 1 may return (that is, activate) from the power saving mode to the normal mode based on the input of the event occurrence notification signal from the body ECU 3, and execute control and processing related to the determination of the device position. The DK-ECU 1 may have a function of detecting a determination event.

In addition to the body ECU 3 and the UWB module 2 described above, various in-vehicle devices may be directly or indirectly connected to the DK-ECU 1. The DK-ECU 1 may be inter-communicably connected to a power supply ECU, a cellular module, an NFC module, or the like via an in-vehicle network or using a dedicated cable. The power supply ECU is an ECU that controls on/off of a traveling power supply mounted on the vehicle Hv. The traveling power supply is a power source for the vehicle Hv to travel. When the vehicle Hv is an engine vehicle, the ignition power supply corresponds to a traveling power supply. When the vehicle Hv is an electric vehicle, the system main relay may be understood as a traveling power supply.

The cellular module is a communication module that performs cellular communication such as 4G or 5G. The NFC module is a communication module for performing near field communication. The NFC means communication with a communicable distance of about several cm to 10 cm. A plurality of NFC modules may be mounted on the vehicle Hv. The NFC module may be used as a tool for pairing the portable device 9 and the DK-ECU 1. The pairing here also includes so-called bonding, which stores keys exchanged between devices.

### (Configuration and function of BLE module)

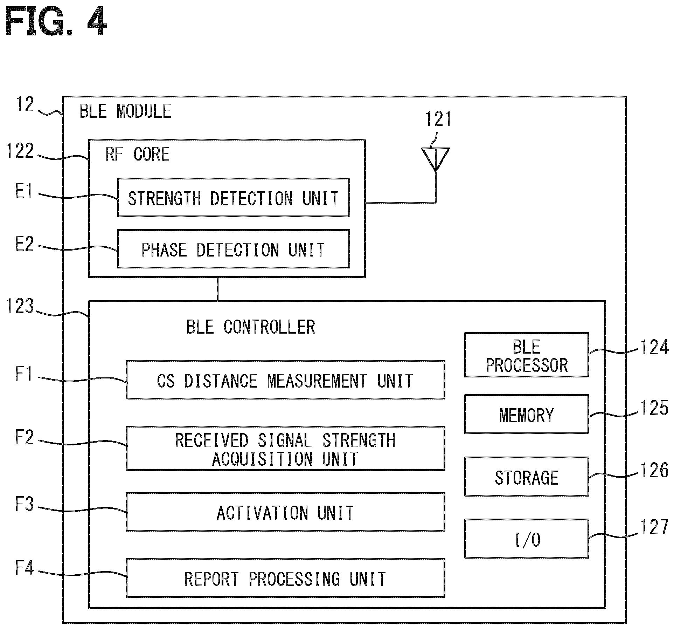

The configuration and function of the BLE module 12 will be described. As illustrated in FIGS. 3 and 4, the BLE module 12 includes an antenna 121, an RF core 122, and a BLE controller 123.

The antenna 121 is an antenna element for transmitting and receiving a radio wave in a frequency band used for BLE communication, that is, a 2.4 GHz band. The 2.4 GHz band can be understood as a frequency band including multiple channels (0 to 39 Ch) used for BLE communication. The antenna 121 is electrically connected to the RF core 122. The channel can also be rephrased as a frequency. Among the plurality of channels allocated to the BLE, a channel used for actual communication (in other words, a use frequency/use channel) changes over time by frequency hopping or by an instruction from the BLE controller.

The RF core 122 is a circuit module that performs a signal process related to transmission and reception of a wireless signal. The RF core 122 may include a modulation circuit, a demodulation circuit, a frequency conversion circuit, an amplifier circuit, a local oscillator, and the like. In addition, the RF core 122 includes an input/output terminal for outputting a signal toward the antenna 121 and receiving a signal from the antenna 121. The RF core 122 is inter-communicably connected to the BLE controller. The RF core 122 demodulates the signal received at the antenna 121 and provides the signal to the BLE controller 123. In addition, the RF core 122 modulates the transmission data input from the BLE controller 123 and emits the modulated transmission data as a radio wave from the antenna 121. The RF core 122 may be implemented as an IC chip (that is, a transmission/reception IC). The BLE controller 123 corresponds to a communication controller.

The RF core 122 is configured to be able to transmit and receive a CW signal for each channel as a CS distance measurement function in addition to a modulation signal for data communication. In addition, the RF core 122 includes a strength detection unit E1 and a phase detection unit E2. The strength detection unit E1 is a functional unit that measures the received signal strength of the received signal. The strength detection unit E1 outputs data indicating the detected received signal strength to the BLE controller 123.

The phase detection unit E2 is a circuit that detects a reception phase that is a phase angle of the received signal with respect to the output signal of the local oscillator when receiving the CW signal. The phase angle of the received signal with respect to the output signal of the local oscillator corresponds to the reception phase. That is, the reception phase can be understood as an output value of arctangent having a ratio of a quadrature-phase (Q) component to an in-phase (I) component of the received signal as an input value. The magnitude of the I component corresponds to the strength of the in-phase component of the received signal. The magnitude of the Q component corresponds to the strength of the quadrature component of the received signal. The I component is obtained by multiplying the received signal by the carrier wave output from the local oscillator. The Q component is obtained by multiplying the received signal by a phase shift signal obtained by shifting the phase of the output signal of the local oscillator by 90°. The phase shift signal can be obtained by passing an output signal of a local oscillator through a phase shift circuit which is a circuit for shifting a phase by 90°.

The local oscillator is a circuit that generates a sine wave or a cosine wave of a carrier frequency. The local oscillator may be implemented by using a voltagecontrolled oscillator (VCO) or the like. The reception phase may be specified based on an IQ signal whose frequency is reduced to baseband. The detected reception phase information is used to calculate the device distance.

The RF core 122 provides the detected value of the reception phase of the CW signal to the BLE controller 123 in association with information (for example, a channel number) indicating the use frequency. Each time the use frequency is switched, the RF core 122 transmits the CW signal and detects the reception phase as a part of the distance measurement process. That is, data indicating the reception phase for each frequency is supplied to the BLE controller 123.

The BLE controller 123 is a microcomputer that controls the RF core 122. The BLE controller 123 includes a processor 124, a memory 125, a storage 126, and an input/output circuit 127. "I/O" in FIG. 4 represents a circuit for Input/Output, that is, an input/output circuit. The BLE controller 123 plays a role of controlling data transfer with the DK-ECU 1. Specifically, the BLE controller 123 supplies received data input from the RF core 122 to the DK-ECU 1 sequentially or based on a request from the DK-ECU 1. In addition, the BLE controller 123 outputs the transmission data input from the DK-ECU 1 to the RF core 122.

The BLE controller 123 includes a CS distance measurement unit F1, a received signal strength acquisition unit F2, an activation unit F3, and a report processing unit F4. Each of the CS distance measurement unit F1, the received signal strength acquisition unit F2, the activation unit F3, and the report processing unit F4 may be a software module or a hardware module. The following descriptions of the CS distance measurement unit F1, the received signal strength acquisition unit F2, the activation unit F3, and the report processing unit F4 can be appropriately replaced with the BLE module 12 or the BLE controller 123.

The CS distance measurement unit F1 is a functional unit that executes CS distance measurement. The CS distance measurement is processing of generating distance data indicating a device distance based on a distance-related value that is a parameter indicating a length of a propagation path of a wireless signal to the portable device 9. The CS distance measurement includes a process of performing bidirectional or unidirectional communication with the portable device 9 to obtain a distance-related value. The CS distance measurement can also be referred to as High Accuracy Distance Measurement (HADM) or phase difference distance measurement. In the present disclosure, a series of processing including communication for CS distance measurement may be also referred to as the CS distance measurement process. The CS distance measurement process corresponds to a first distance measurement process.

The distance-related value may be a parameter that takes a value corresponding to the propagation time of the wireless signal, in other words, the flight time. The reception phase of the signal transmitted from the portable device 9 corresponds to a distance-related value. The distance-related value may be an arrival time of a wireless signal transmitted by the portable device 9. The arrival time of the wireless signal may alternatively be an RTT. These distance-related values are parameters different from the received signal strength. As the CS distance measurement process, the CS distance measurement unit F1 of the present embodiment acquires a reception phase for each frequency and calculates a device distance based on the reception phase. The reception phase is a phase difference between the CW signal transmitted by the portable device 9 and the CW signal received by the BLE module 12. The reception phase can be referred to as a transmission/reception phase difference, a single frequency phase difference, or a firstorder phase difference.

The CS distance measurement unit F1 acquires a reception phase for each frequency by a one-way method. The one-way method is a method of adopting the reception phase of the CW signal transmitted from the portable device 9 as it is as a calculation material of the inter-frequency phase difference on the assumption that the initial phase of the CW signal for each frequency transmitted from the portable device 9 is constant. The reception phase (in other words, the single frequency phase difference) used as the calculation material of the inter-frequency phase difference can also be acquired by a passive two-way method, an active two-way method, or the like. The passive two-way method and the active two-way method will be separately described later as a supplement.

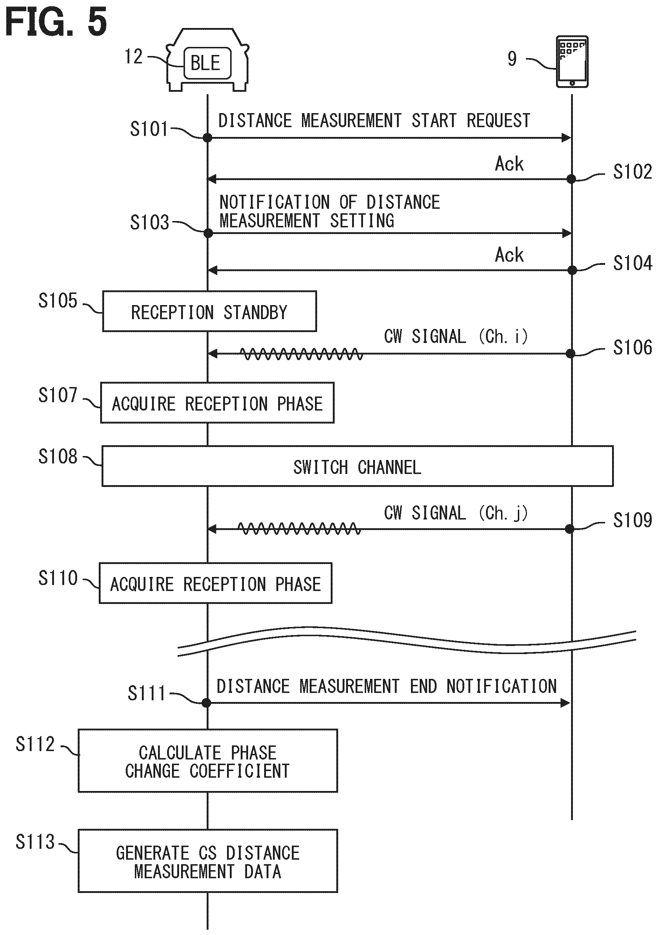

FIG. 5 is a flowchart illustrating an example of the CS distance measurement process, and includes steps S101 to S111. The CS distance measurement process includes a preparation phase for adjusting a distance measurement execution condition and the like, a collection phase for collecting a reception phase by actually transmitting and receiving the CW signal, and an arithmetic phase for calculating a distance based on the collected reception phase for each frequency. In the present disclosure, wireless communication for acquiring a distance-related value, such as transmission and reception of a CW signal, is also referred to as distance measurement communication.

Step S101 is a step in which the BLE module 12 transmits a CS distance measurement start request to the portable device 9. The CS distance measurement start request is a BLE signal that requests to start CS distance measurement. The CS distance measurement start request may be transmitted using a data channel. The portable device 9 returns a positive response signal (so-called Ack) to the BLE module 12 based on receiving the CS distance measurement start request (S102).

The BLE controller 123 transmits a distance measurement setting notification signal based on receiving Ack in response to the CS distance measurement start request from the portable device 9 (S103). The distance measurement setting notification signal is a BLE signal indicating specifications related to execution of communication for CS distance measurement. The specifications related to execution of the distance measurement communication may include some or all of a setting value of the initial phase, a hopping interval, a channel transition amount, and the initial frequency. The setting value of the initial phase is basically set to 0. The hopping interval represents a time for switching the frequency, in other words, a time for maintaining one frequency. The hopping interval may be the same as a connection interval (Connection Interval) used for data communication. The channel transition amount is a parameter indicating a change amount of a channel at the time of channel switching. The channel transition amount may be the same value as the hop increment (hopIncrement) at the time of data communication. In other words, the channel transition amount in the CS distance measurement may be decided by hop increment. The initial frequency is a frequency of a CW signal to be transmitted first in a series of distance measurement communication. The initial frequency can be randomly decided. The frequency information may be expressed by a channel number.

The portable device 9 returns Ack to the BLE module 12 based on receiving the distance measurement setting notification signal (S104). The BLE module 12 transitions to a state in which the signal of the initial frequency can be received based on receiving the Ack from the portable device 9 (S105). The state in which the wireless signal can be received can also be rephrased as a reception state or a scan state.

The portable device 9 starts the transmission of the CW signal at the initial frequency at a timing when a predetermined time elapses after the Ack is returned (S106). The transmission of the CW signal may be stopped at a timing when a certain period of time has elapsed from the start of the transmission. The CW transmission time, which is the time during which the CW signal is continuously transmitted, may be set to be shorter than the hopping interval. After receiving the distance measurement setting notification signal, the portable device 9 may start transmitting the CW signal based on further receiving the CW transmission request from the **BLE** module 12. The CW transmission request is a **BLE** signal for requesting transmission of a CW signal.

When receiving the CW signal from the portable device 9, the **BLE** module 12 detects a reception phase and stores the reception phase data in the memory 125 together with frequency information (for example, a channel number) (S107). The BLE module 12 and the portable device 9 automatically switch the use frequency at the hopping interval agreed in advance in step S103 (S108). The frequency after the change can be uniquely determined from the frequency before the change and the channel transition amount agreed in advance. The use channel after the change may be a channel with a number obtained by adding the setting value of the hop increment to the channel number before the change.

When switching the use channel, the portable device 9 transmits a CW signal of a new use channel (S109). When the use channel is switched, the BLE module 12 also transitions to a state in which a signal of a new use channel can be received. The BLE module 12 monitors the reception phase at the frequency after the switching (S110).

The BLE module 12 and the portable device 9 repeat steps S108 to S110 until reception phases in all channels (0 to 36 Ch) available for data communication are collected. The BLE module 12 and the portable device 9 may end the repetitive processing at a timing when the reception phases for each of the predetermined necessary number of channels can be collected. The required number here may be the same as or smaller than the number of data channels. A configuration in which the required number is set to 37 corresponds to a configuration in which reception phases for all channels are collected. As the number of channels for collecting reception phases increases, the distance measurement accuracy described later can be enhanced. On the other hand, the time required for the distance measurement communication and the power consumption may increase. The required number may be 3, 4, 5, 8, 10, 16, or the like. The required number may be set to any value from 2 to 37. Of course, when the number of data channels is 37 or more, the required number can take a value of 37 or more.

The BLE module 12 transmits the distance measurement end notification signal to the portable device 9 at a timing when the reception phase for each required number of frequencies can be collected (S111). The distance measurement end notification signal is a data signal for making a notification that the distance measurement communication is ended. The portable device 9 switches to the normal data communication mode based on receiving the distance measurement end notification signal. The normal data communication mode corresponds to a state in which predetermined data such as audio data can be transmitted and received. Transmission and reception of the distance measurement end notification signal is an any element and may be omitted. The portable device 9 may return Ack to the BLE module 12 based on receiving the distance measurement end notification signal.

When the collection of the reception phase for each frequency is completed, the CS distance measurement unit F1 calculates the phase change coefficient (α) in step S111. The phase change coefficient is a parameter indicating the degree of change in the reception phase according to the change in frequency. The phase change coefficient can also be referred to as a phase change degree, a phase shift amount, or a phase-inter-frequency phase correlation coefficient.

The phase change coefficient may be calculated based on the reception phases monitored at the first frequency and the second frequency, which are any two frequencies. A relationship of α=Δφ/Δf is established, where Δf is a difference frequency that is a difference between the first frequency and the second frequency, Δφ is an inter-frequency phase difference that is a difference between reception phases monitored at the first frequency and the second frequency, and α is a phase change coefficient. The inter-frequency phase difference (Δφ) is a difference between reception phases monitored at two different frequencies. The inter-frequency phase difference can be referred to as a two-frequency phase difference or a second-order phase difference. The inter-frequency phase difference corresponds to a displacement amount of a phase angle due to a change in the use frequency.

The CS distance measurement unit F1 of the present embodiment calculates a regression line indicating the relationship between the frequency and the reception phase based on the reception phase for each frequency, and adopts the slope of the regression line as the phase change coefficient. This is because the slope of the regression line indicates the displacement amount of the reception phase with respect to the frequency shift amount. The regression line and the slope thereof may be calculated by any method such as a least squares method. When the regression line is represented by y=a·x+b, the coefficient a of x corresponds to the slope of the regression line. That is, the CS distance measurement unit F1 can calculate the coefficient (a) as the phase change coefficient (α). According to this configuration, it is possible to calculate the phase change coefficient based on the inter-frequency phase difference and the difference frequency for each combination of the plurality of frequencies. "x" in the above Expression is a variable corresponding to the frequency, and "y" is a variable corresponding to the reception phase. The regression line can also be rephrased as an approximate straight line.

The CS distance measurement unit F1 may temporarily calculate the first regression line based on all the monitored reception phase data, exclude a value (so-called outlier) at which a distance from the temporarily calculated first regression line is equal to or more than a predetermined value, and recalculate the second regression line. In this case, the CS distance measurement unit F1 may adopt the slope of the second regression line as the phase change coefficient. As described above, the phase change coefficient used for distance calculation may be decided based on a regression line having data excluding outliers as a population. According to this configuration, the accuracy of the inter-frequency phase difference, and eventually, the distance measurement accuracy can be improved.

The CS distance measurement unit F1 may calculate the inter-frequency phase difference (Δφ), the difference frequency (Δf), and the phase change coefficient for each combination of frequencies at which the reception phase can be monitored. The CS distance measurement unit F1 may adopt an average value or a median value of the phase difference change coefficients for each frequency combination as the phase difference change coefficient used for distance calculation.

Step S112 is a step in which the CS distance measurement unit F1 calculates the device distance (D) using the phase difference change coefficient generated based on the reception phase information at the plurality of frequencies. There is a relationship of D∝C·Δφ/(2π·Δf) =C·α/2π between the difference frequency Δf and the inter-frequency phase difference (Δφ) where D is a device distance. The parameter "C" in the above Expression indicates the propagation speed of the radio wave (3×10^8 m/sec). The CS distance measurement unit F1 calculates the device distance based on the relational expression. The CS distance measurement unit F1 calculates the device distance using Equation 1: D=k·C·α/2π. The parameter k in Equation 1 is a design value and is set to 1.0 or 0.5. The value of k can be decided by whether the transmission/reception phase difference is calculated as a one-way phase change coefficient or as a reciprocating phase change coefficient. The CS distance measurement unit F1 stores the calculated device distance data in the memory 125. In the present disclosure, the communication distance calculated by the BLE module 12 in the CS distance measurement process is referred to as a first distance. The first distance can also be referred to as a CS distance measurement value.

As another aspect, the CS distance measurement unit F1 may calculate the temporary value (d) of the device distance using Δf and Δφ for each combination of frequencies, and adopt an average value or a median value thereof as the device distance at the use antenna. The temporary value (d) of the device distance in a certain combination of frequencies can be calculated using d=k·C·Δφ/(2π·Δf) or the like.

Among the series of processes illustrated in FIG. 5, the steps executed by the BLE module 12 are executed by cooperation between the CS distance measurement unit F1 and the RF core 122. In the above description, as an example, the BLE module 12 decides and makes a notification of the execution condition related to the CS distance measurement, but the present invention is not limited thereto. Instead of the BLE module 12, the portable device 9 may decide specifications related to execution of distance measurement communication to transmit the distance measurement setting notification signal. In addition, the execution subject of each step can be interchanged. The above sequence may be performed mainly (in other words, as a master) by the portable device 9.

The received signal strength acquisition unit F2 is configured to acquire data indicating the received signal strength of the signal from the portable device 9 for each frequency from the RF core 122. The BLE module 12 periodically transmits and receives a data signal for periodically checking communication with the portable device 9 while being communicably connected to the portable device 9. The received signal strength acquisition unit F2 acquires the received signal strength data when the data signal for the communication check is received. Communication for communication check can be performed at a connection interval. Communication for communication check may be performed every time channel hopping is performed. The connection interval corresponds to a first interval.

The signal used to detect the received signal strength is not limited to the data signal for communication check. The signal may be a normal data signal or an advertisement signal. The received signal strength thereafter may be understood as the received signal strength of the signal transmitted from the portable device 9 unless otherwise noted.

The activation unit F3 is a software/hardware module that activates the main controller 11 based on the first distance calculated in the CS distance measurement process being less than a predetermined value (hereinafter, also referred to as an activation distance). The activation unit F3 transmits an activation signal to the main controller 11 based on a state in which the first distance is less than the activation distance continuing for a predetermined time or a predetermined number of times. The activation signal is a signal for activating the main controller 11.

The activation here means switching from the power saving mode to the normal mode. The activation can be rephrased as returning, enabling, activating, waking up, or the like. The activation of the main controller 11 may be implemented by cooperation with the power supply circuit 14. The activation unit F3 may output a control signal for activating the main controller 11 toward the power supply circuit 14, and the power supply circuit 14 may receive the control signal to activate the main controller 11. Switching from the normal mode to the power saving mode can be rephrased as sleep, shutdown, or the like. The state of the power saving mode can also be referred to as a sleep state.

The activation distance may be set to any value such as 2.5 m, 3.0 m, 5.0 m, or 6.0 m. As the activation distance is set to a smaller value, the frequency of activating the main controller 11 can be reduced, and the power consumption can be suppressed. On the other hand, as the activation distance is set to a smaller value, the timing at which the system is activated is delayed with respect to the approach of the user. Therefore, the system activation cannot be in time in a case where the user runs, and the convenience of the user may be impaired.

The report processing unit F4 transmits the received signal strength data indicating the received signal strength acquired by the received signal strength acquisition unit F2 and the first distance data indicating the first distance calculated by the CS distance measurement unit F1 to the main controller 11. Transmission of various pieces of data may be periodically performed while the main controller 11 is operating in the normal mode. The report processing unit F4 may transmit various pieces of data based on a request from the main controller 11.

The BLE module 12 periodically performs the CS distance measurement process while the main controller 11 is in the power saving mode and is communicably connected to the portable device 9. On the other hand, after the main controller 11 returns to the normal mode, the BLE module 12 stops the execution of the periodic CS distance measurement process. Of course, the BLE module 12 may continue the periodic CS distance measurement process even after the main controller 11 returns to the normal mode. The BLE module 12 may be configured to execute the CS distance measurement process only when a determination event occurs while the main controller 11 is in the normal mode.

### (Function of main controller)

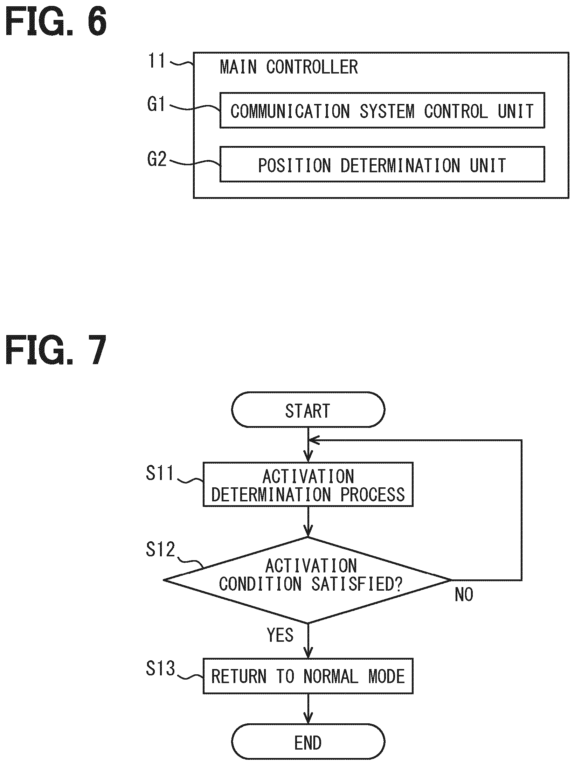

The main controller 11 includes a communication system control unit G1 and a position determination unit G2 as functional blocks as illustrated in FIG. 6. Each functional block is enabled in the normal mode. The communication system control unit G1 is a software/hardware module that controls the operation of each of the BLE module 12 and the UWB module 2. When the communication system control unit G1 detects occurrence of a determination event, in other words, a predetermined user action, the communication system control unit G1 causes the BLE module 12 to perform the CS distance measurement process. As described above, the occurrence of the determination event may be detected by the body ECU 3, or may be detected by the main controller 11 based on signals input from various sensors or the ECU.

In addition, the communication system control unit G1 performs a cyclic measurement process which is a process of causing each of the plurality of UWB modules 2 to perform UWB distance measurement in order. The communication system control unit G1 periodically executes the cyclic measurement process during the operation in the normal mode. The communication system control unit G1 may dynamically change the cyclic measurement interval, which is the execution interval of the cyclic measurement process, according to the value of the device distance monitored within the latest predetermined time or the state of the vehicle Hv. The communication system control unit G1 may perform the cyclic measurement process based on the detection of the occurrence of the determination event.

The position determination unit G2 determines the device position based on the second distance for each UWB module 2 obtained as a result of the cyclic measurement process. The device position is the position of the portable device 9 with respect to the vehicle Hv. The device position may be represented by multiple areas/zones preset in the vehicle Hv, such as the interior of the vehicle, the neighboring area, the intermediate area, and the distant area. The inside of the vehicle is the vehicle interior. The inside of the vehicle can include the interior of the trunk. The inside of the vehicle may be divided into a vehicle interior and the inside of the trunk.

The neighboring area is an area where the distance from the vehicle Hv outside the vehicle is less than a predetermined neighboring determination value. The neighboring determination value is a parameter that defines a neighboring area outside the vehicle. The neighboring determination value is set to a value such as 1.0 m, 1.5 m, or 2 m. The neighboring area can be understood as an area where automatic unlocking/locking of the vehicle Hv can be performed. The neighboring area may be rephrased as a passive entry area.

The distant area is an area where the distance from the vehicle Hv is equal to or greater than a predetermined distant determination value. The distant determination value is a parameter for determining that the portable device 9 does not exist around the vehicle Hv. The distant determination value is set to a value such as 5.0 m, 6.0 m, 10 m, or 12 m. The intermediate area is an intermediate area between the distant area and the neighboring area. The intermediate area may be a so-called welcome area that performs predetermined welcome control such as turning on vehicle exterior lighting in response to entry of the portable device 9 into the area. The intermediate area may be an area where predetermined control that is not executed when the portable device 9 is present far outside the vehicle, such as authentication by wireless communication with the portable device 9, tracking of a device position, and shortening of a position determination cycle, is executed/started. The intermediate area may also be referred to as a standby area, a peripheral area, or the like. In addition, the intermediate area may be an area where the user can use a function of parking/exiting the vehicle Hv by remote control.

The neighboring area, the intermediate area, and the distant area described above are subdivided areas outside the vehicle. The position determination unit G2 may simply determine whether the portable device 9 is present in the vehicle. Further, the position determination unit G2 may determine not only the distance from the vehicle Hv to the portable device 9 but also the device existing direction. The device existing direction is a direction in which the portable device 9 exists when viewed from the vehicle Hv/in-vehicle anchor. The device existing direction may be expressed as right, left, rear, front, or the like. The neighboring area may be divided into a right area, a left area, and a rear area. The right area is a range outside the vehicle that is less than the neighboring determination value from the right door handle or the right B pillar. The left area and the rear area can also be defined with reference to a specific part of the vehicle Hv. As in the neighboring area, the intermediate area may also be subdivided into front, back, left, and right.

As described above, the position determination unit G2 of the present embodiment determines a stay area which is an area where the portable device 9 is present. As another aspect, the position determination unit G2 may calculate the device position coordinates instead of/in addition to the determination of the stay area. The device position coordinates mean position coordinates at which the portable device 9 is present in a two-dimensional/three-dimensional coordinate system based on a predetermined position of the vehicle Hv. The device position coordinates can be calculated by a method similar to three-point positioning or multi-point positioning in the technical fields of GPS and position estimation.

The main controller 11 transmits device position data, which is data indicating a determination result of the device position, to a predetermined ECU such as the body ECU 3. The main controller 11 may periodically generate the device position data during the normal mode. In addition, the main controller 11 may perform the cyclic measurement process in response to the occurrence of the determination event and generate the device position data.

### (Operation example of DK-ECU)

While the main controller 11 is in the power saving mode, the BLE module 12 periodically performs the activation determination process as illustrated in FIG. 7 (S11). The activation determination process is a process for determining whether an activation condition of the main controller 11 is satisfied. The activation condition includes the first distance being less than the activation distance. Thus, the activation determination process includes a CS distance measurement process. The activation condition may include the received signal strength from the portable device 9 monitored by the BLE module 12 being equal to or greater than a predetermined strength threshold value. In this case, the activation determination process may include a process of measuring received signal strength of the advertisement signal or the data signal from the portable device 9. The activation condition may include various items related to a communication state with the portable device 9. The items related to the communication state include the received signal strength, the device distance, a degree of variation in the received signal strength within a certain period of time, availability of communication connection, an SN ratio, and the like. The activation determination process can be appropriately designed to include a process for collecting values/data for each item constituting the activation condition.

When the activation condition is satisfied (YES in S12), the BLE module 12 returns to the normal mode by transmitting an activation signal to the main controller 11 (S13). In a case where various pieces of data related to the communication state with the portable device 9 collected in the activation determination process do not satisfy the activation condition (NO in S12), the BLE module 12 re-executes the activation determination process after a predetermined standby time has elapsed. The activation determination process may be performed every time an advertisement/data signal is received from the portable device 9. The activation determination process may be executed in parallel with processes such as communication connection and data communication.

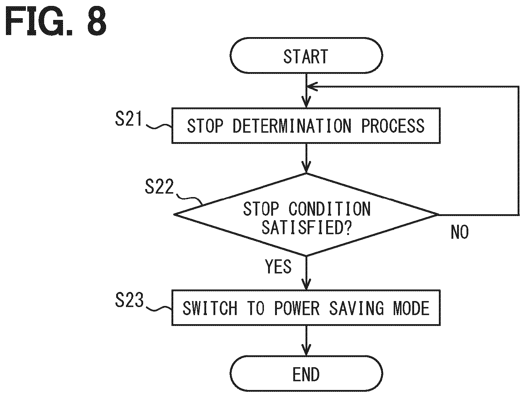

In the normal mode, the main controller 11 periodically performs the stop determination process as illustrated in FIG. 8 (S21). The stop determination process may be performed with a user operation of turning off the traveling power supply, a door locking operation, or the like as a trigger.

The stop determination process is a process for determining whether a stop condition of the main controller 11 is satisfied. The stop condition includes that the vehicle Hv is locked in a state where the traveling power supply is off. The stop condition may include that the smallest value of the plurality of second distances collected in the cyclic measurement process is equal to or more than the predetermined stop distance. The stop distance can be set to 10 m, 15 m, or the like. In addition, the stop condition may include that a state in which the received signal strength is less than the predetermined stop strength continues for a predetermined time. The stop condition may also include various items related to the communication state with the portable device 9. The stop determination process can be appropriately designed to include a sequence for collecting values/data for each item constituting the activation condition.

When the stop condition is satisfied (YES in S22), the main controller 11 switches to the power saving mode after performing the predetermined stop preparation process (S23). The stop preparation process may include saving the current vehicle state in the storage 113, notifying the BLE module 12 that the mode is about to switch to the power saving mode, and the like. When various pieces of data related to the communication state with the portable device 9 collected in the stop determination process do not satisfy the stop condition (NO in S22), the main controller 11 performs the stop determination process after a predetermined standby time has elapsed.

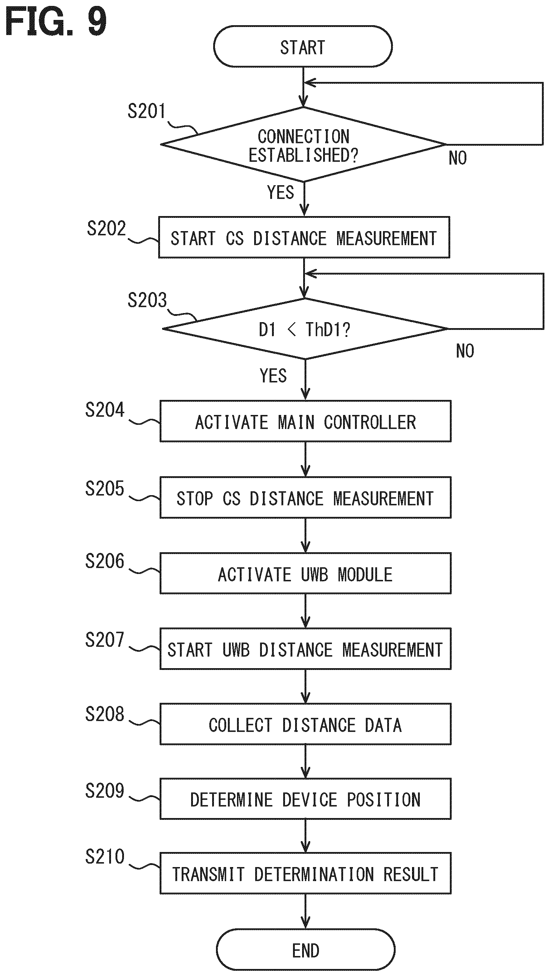

FIG. 9 is a flowchart illustrating a more specific operation example of the DK-ECU 1 in a scene where the user approaches the parked vehicle Hv. The flowchart illustrated in FIG. 9 illustrates a flow until the main controller 11 returns from the power saving mode to the normal mode and performs the position determination process. For convenience, a series of processes related to activation and position determination of the main controller 11 is referred to as a user approach reaction process. As illustrated in FIG. 9, the user approach reaction process may include steps S201 to S210. When step S201 is performed, the main controller 11 is in the power saving mode. In addition, the portable device 9 is sufficiently away from the vehicle Hv, and the portable device 9 and the BLE module 12 are not connected.

Step S201 is a step in which the BLE controller 123 determines whether communication connection with the portable device 9 has been established. When the communication connection with the portable device 9 is established (YES in S201), the BLE controller 123 starts periodic execution of CS distance measurement (S202). The periodic execution of the CS distance measurement may be continued until the communication connection with the portable device 9 is disconnected or the main controller 11 is activated.

Step S203 is a step of determining whether the device distance (that is, the first distance) obtained by the CS distance measurement is less than the activation distance. Step S203 is performed every time CS distance measurement is performed. "D1" in FIG. 9 indicates the first distance. "ThD1" indicates the activation distance. The first distance used for comparison with the activation distance, in other words, for determination of whether to activate the main controller 11 may be the latest calculated value.

When the first distance is less than the activation distance (YES in S203), the BLE controller 123 as the activation unit F3 activates the main controller 11 (S204). The BLE controller 123 stops the execution of the periodic CS distance measurement process based on the activation of the main controller 11 (S205). Steps S201 to S203 correspond to the above-described activation determination process.

The first distance used for determining whether to activate the main controller 11 may be an average value or a median value of the first distances monitored within the latest predetermined time, that is, a moving average value/moving median value. According to the configuration in which the main controller 11 is activated based on the moving average/median value of the first distance being equal to or greater than the activation threshold value, the possibility of unnecessarily activating the main controller 11 can be further reduced.

Upon activation, the main controller 11 switches each UWB module 2 to a communicable state (S206). The main controller 11 starts periodic execution of the cyclic measurement process (S207). The periodic execution of the cyclic measurement process may be continued until the traveling power supply of the vehicle Hv is turned on or the communication connection with the portable device 9 is terminated.

Prior to execution of the cyclic measurement process, the main controller 11 may transmit the UWB distance measurement start request to the portable device 9 by BLE. As a result, the portable device 9 can activate the UWB module 94 and respond to the UWB signal from the vehicle Hv. The transmission of the UWB distance measurement start request may be an any element and may be omitted. In a configuration in which the portable device 9 constantly activates the UWB module 94, transmission of the UWB distance measurement start request can be omitted. The content of the preliminary preparation process of various distance measurement processes can be changed in accordance with the configuration of the portable device 9.

Step S208 is a step in which the main controller 11 collects the second distance data from each of the plurality of UWB modules 2 as a result of the cyclic measurement process. When the collection of the second distance data is completed, the main controller 11 executes step S209.

Step S209 is a step in which the main controller 11 determines the device position based on the second distances monitored in the plurality of UWB modules 2. The device position may be determined using various algorithms. For example, the main controller 11 determines that the device position is inside the vehicle when the second distance monitored by the in-vehicle anchor 2A is less than a predetermined indoor determination value. The indoor determination value may be set to 1 m or the like. In addition, in a case where the second distance monitored by the in-vehicle anchor 2A is equal to or greater than a predetermined value, it may be determined that the device position is outside the vehicle.

In a state where the main controller 11 determines that the portable device 9 is present outside the vehicle, when there is an outdoor unit that monitors a second distance less than the neighboring determination value, the main controller may determine that the device position is in a neighboring area. When there is no outdoor unit in which the second distance is less than the neighboring determination value and there is an outdoor unit that monitors the second distance less than the distant determination value, the device position may be determined to be in the intermediate area. When there is no outdoor unit monitoring the second distance less than the distant determination value, the main controller 11 may determine that the device position is in the distant area. When the UWB module 2 monitoring the smallest second distance is the left anchor 2C, it may be determined that the portable device 9 is present left of the vehicle.

As described above, the main controller 11 may calculate the device position coordinates by combining the second distances in the plurality of UWB modules 2. In the configuration in which the UWB module 2 reports the position related data to the DK-ECU 1, the main controller 11 may determine the device position by combining the position related data reported from each UWB module 2. In addition, the main controller 11 may determine the device position using the received signal strength of the signal from the portable device 9 monitored by the BLE module 12 and the UWB module 2. When the received signal strength at the in-vehicle anchor 2A is larger than the maximum value of the received signal strength monitored at the outdoor unit by a predetermined value or more and the second distance monitored at the in-vehicle anchor 2A is within a predetermined value (for example, 2 m), the main controller 11 may determine that the device position is inside the vehicle.

When the determination of the device position is completed, the main controller 11 transmits device position data indicating the determination result to the body ECU 3. The body ECU 3 can execute predetermined control such as unlock/lock and power on of the vehicle Hv based on the device position data provided from the DK-ECU 1.

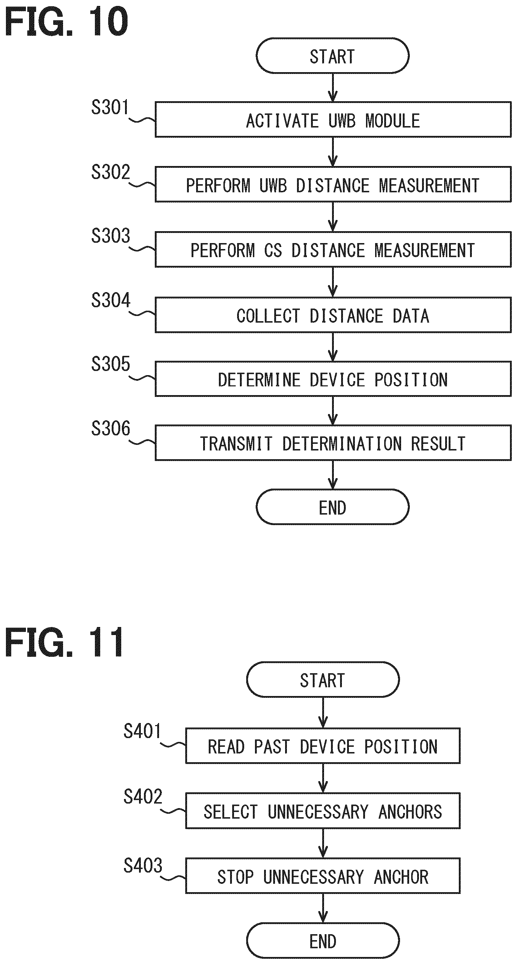

Although the control pattern of stopping the execution of the periodic CS distance measurement by the BLE module 12 after the main controller 11 is activated is described above, the operation of the DK-ECU 1 is not limited thereto. The DK-ECU 1 may continue the execution of the periodic CS distance measurement even after the main controller 11 is activated. FIG. 10 is a flowchart for describing the operation of the DK-ECU 1 in the control pattern, and illustrates a sequence following step S204 of FIG. 9. Step S301 illustrated in FIG. 10 is a process after activation of the main controller 11, and is a step in which the main controller 11 activates each UWB module 2. Step S302 is a step in which the main controller 11 starts periodic execution of the cyclic measurement process.

Step S303 is a step in which the BLE module 12 executes CS distance measurement at a timing when UWB distance measurement by the UWB module 2 is not performed. The BLE module 12 can acquire the timing when the UWB distance measurement by the UWB module 2 is not performed from the main controller 11. After the main controller 11 is activated, the BLE module 12 may be configured to execute the CS distance measurement process based on an instruction from the main controller 11. Step S303 may be performed at predetermined intervals.

Step S304 is a step in which the main controller 11 acquires the second distance from the plurality of UWB modules 2 and acquires the first distance from the BLE module 12. Step S305 is a step in which the main controller 11 as the position determination unit G2 determines the device position based on the first distance data and the plurality of pieces of second distance data. As in step S210, step S306 is a step in which the main controller 11 transmits the determination result of the device position to the body ECU 3.

According to the configuration in which not only the second distance but also the first distance is used in the determination of the device position as described above, an effect of enhancing the position determination accuracy can be expected.

### (Supplement to UWB Module used for cyclic measurement process)

Although the configuration in which the cyclic measurement process is performed using all the UWB modules 2 is described above, it is not always necessary to use all the UWB modules 2. The main controller 11 may be configured to divide the plurality of UWB modules 2 into unnecessary anchors and useful anchors based on the previous device position determination result, and not to use the unnecessary anchors for the cyclic measurement process. The unnecessary anchor is the UWB module 2 that does not perform the UWB distance measurement process in the cyclic measurement process, in other words, the UWB module 2 that does not operate. The unnecessary anchor can be rephrased as an invalid anchor. The useful anchor is the UWB module 2 that performs the UWB distance measurement process in the cyclic measurement process. The UWB module 2 other than the unnecessary anchor corresponds to a useful anchor. A useful anchor can be rephrased as a valid anchor.

FIG. 11 is a flowchart illustrating an operation example of the main controller 11 corresponding to the technical idea, and includes steps S401 to S403. The flowchart illustrated in FIG. 11 can be executed in response to completion of the device position determination process in the previous cyclic measurement process or the like.

Step S401 is a step in which the main controller 11 refers to the previous determination result of the device position. Step S402 is a step in which the main controller 11 divides each UWB module 2 into an unnecessary anchor or a useful anchor based on the device position information read in step S401.

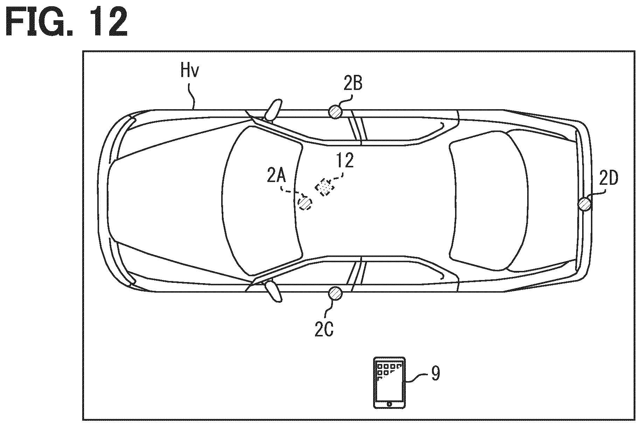

When determining that the portable device 9 is present in the left area for the vehicle Hv as illustrated in FIG. 12, the main controller 11 sets the right anchor 2B as an unnecessary anchor. When determining that the portable device 9 is present right of the vehicle Hv, the main controller 11 sets the left anchor 2C as an unnecessary anchor. In this manner, the main controller 11 may set the outer anchor located opposite to the device existing direction as the unnecessary anchor.

When determining that the portable device 9 is present outside the vehicle, the main controller 11 may set the in-vehicle anchor 2A as an in-vehicle anchor as an unnecessary anchor until the door/window is opened. In addition, when determining that the portable device 9 is present in the vehicle, the main controller 11 may set the right anchor 2B, the left anchor 2C, and the rear anchor 2D as the outer anchors as unnecessary anchors until the door/window is opened.

The data indicating the correspondence relationship between the device position/device existing direction and the unnecessary anchor may be stored in the storage 113 in advance in a form of a data table, a program, or the like. The main controller 11 may dynamically change the setting of the unnecessary anchor according to the device position/device existing direction based on the preregistered data/program.

The main controller 11 may be implemented by a computer that stops the UWB module 2 provided in the unnecessary zone decided according to the device position in an aspect. The vehicle outer face portion opposite to the device existing direction corresponds to the unnecessary zone. In a case where the portable device 9 is present in the vehicle, the vehicle outer face portion may correspond to the unnecessary zone. When the portable device 9 is present outside the vehicle, the inside of the vehicle can correspond to the unnecessary zone.

When the UWB module 2 set as the unnecessary anchor is present, the main controller 11 stops the operation of the UWB module 2 (S403). The setting of the unnecessary anchor may be updated for each cyclic search process. In addition, the setting of the unnecessary anchor may be reset every time the cyclic search process is performed a predetermined number of times (for example, three times). According to the configuration in which the setting of the unnecessary anchor is reset every predetermined number of times, it is possible to reduce the possibility of erroneous determination of the device position due to continuous invalidation of some of the UWB modules 2.

### (Activation determination process)

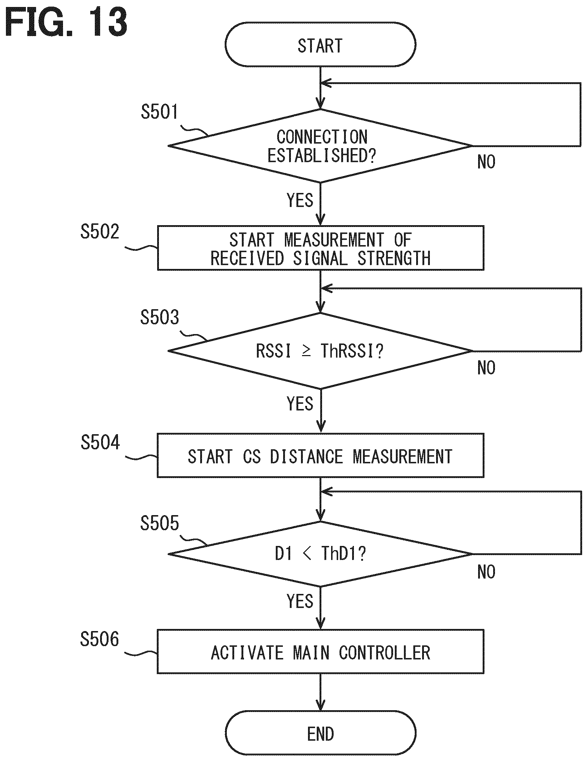

As illustrated in FIG. 13, the BLE controller 123 may be configured to start the execution of the periodic CS distance measurement when the received signal strength is a predetermined value or more after the communication connection with the portable device 9 is established. In other words, the BLE controller 123 may be configured to perform the CS distance measurement process on condition that communication connection with the portable device 9 has been established and the received signal strength is equal to or greater than a predetermined value.

FIG. 13 is a flowchart illustrating a control example corresponding to the technical idea, and includes steps S501 to S506. The flowchart shown in FIG. 13 can be performed as an alternative process to steps S201 to S204 in FIG. 9. That is, step S501 can be periodically performed while the main controller 11 is in the power saving mode.

Step S501 illustrated in FIG. 13 is a step in which the **BLE** controller 123 determines whether communication connection with the portable device 9 has been established. When communication connection is established (S501 YES), periodic data communication with the portable device 9 and measurement of received signal strength are started (S502). Periodic data communication with the portable device 9 may continue while the communication connection is maintained. When the communication connection with the portable device 9 ends, the process starts again from step S501. As another aspect, the periodic communication may be transmission and reception of an advertisement signal.

Step S503 is a step of determining whether the received signal strength of the data signal transmitted from the portable device 9 as periodic data communication is a predetermined strength threshold value. Step S503 is performed every time the periodic communication is performed. "RSSI" in FIG. 13 indicates a monitoring value of the received signal strength of the signal from the portable device 9. "ThRSSI" indicates the strength threshold value. The strength threshold value is set to a value corresponding to the received signal strength monitored in a situation where the device distance is a predetermined value (for example, 10 m). The ideal environment means a situation in which there is no obstacle between the portable device 9 and the BLE module 12. The strength threshold value may be set in a test or simulation.

The received signal strength used for the comparison with the strength threshold value in step S503, in other words, the determination as to whether to execute CS distance measurement may be the latest monitoring value. Furthermore, the received signal strength used for determining whether to execute CS distance measurement may be an average value or a median value of the received signal strengths monitored within the latest predetermined time, that is, a moving average value/moving median value. According to this configuration, it is possible to reduce the possibility of unnecessarily executing the CS distance measurement process.

When the received signal strength is equal to or greater than the strength threshold value (YES in S503), the BLE controller 123 starts periodic execution of CS distance measurement (S504). Step S505 is a step of determining whether the latest first distance obtained by the CS distance measurement process is less than the activation distance. The determination in step S505 is performed every time the CS distance measurement process is performed.

When the first distance is less than the activation distance (YES in S505), the BLE controller 123 activates the main controller 11 (S506). The subsequent processing may be similar to that of steps S205 to S210 in FIG. 9 or steps S301 to S306 in FIG. 10. Steps S501 to S505 also correspond to an example of the above-described activation determination process.

According to the above configuration, it is possible to reduce the possibility of performing the CS distance measurement process in a situation where the received signal strength is low, that is, in a scene where there is a high possibility that the portable device 9 and the vehicle Hv are still away from each other. Naturally, the reduction in the execution frequency of the CS distance measurement process leads to a reduction in power consumption. According to the above configuration, power consumption can be further reduced. Note that the strength threshold value can also be understood as a parameter for starting CS distance measurement in an aspect.

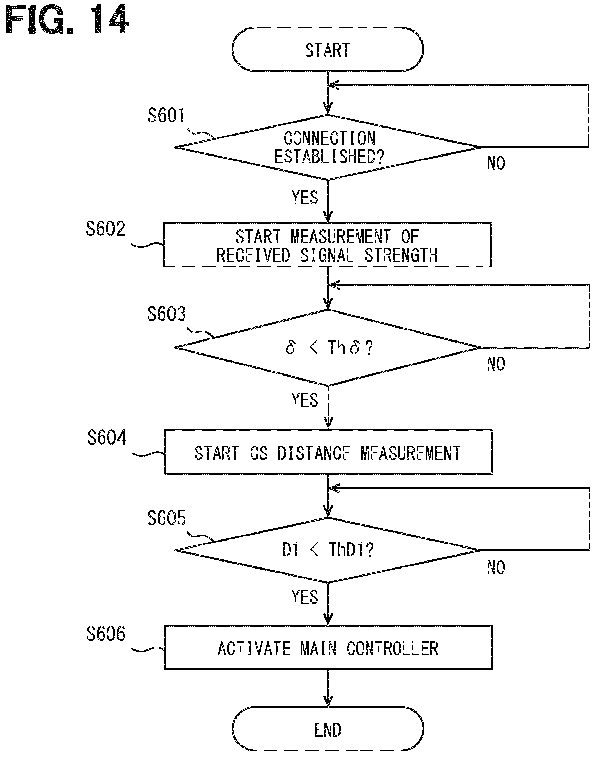

Furthermore, as illustrated in FIG. 14, the BLE controller 123 may be configured to perform the CS distance measurement process on condition that communication connection with the portable device 9 has been established and the variation in received signal strength is less than a predetermined value. "δ" in FIG. 14 indicates the degree of variation in received signal strength. "Thδ" in FIG. 14 represents a threshold value for the degree of variation in received signal strength. The degree of variation in received signal strength can be expressed by variance in statistics. Of course, the degree of variation in received signal strength may be expressed by a standard deviation or a difference between a maximum value and a minimum value.

Steps S601 to S602 and steps S604 to S606 illustrated in FIG. 14 are similar to steps S501 to S502 and steps S504 to S506 described above, and thus detailed description thereof is omitted. Step S603 is a step of determining whether the degree of variation in received signal strength monitored within the latest predetermined time is less than a predetermined threshold value. In a case where the degree of variation in the received signal strength is less than the predetermined threshold value (YES in S603), the BLE controller 123 starts execution of the periodic CS distance measurement process. In other words, the BLE controller 123 may be configured not to start the periodic execution of the CS distance measurement process when the degree of variation in the received signal strength is equal to or greater than the threshold value.

In general, in a case where there is an object that blocks radio waves, such as a wall, between the portable device 9 and the vehicle Hv, the degree of variation in received signal strength is large, compared with that in a case where there is no wall or the like. Paradoxically, the fact that the degree of variation in the received signal is large suggests that the portable device 9 may exist in a building such as a house or an office. Of course, when the portable device 9 as the key of the vehicle Hv is present in the building, the vehicle Hv is also unlikely to be used by the user. Therefore, it is also less necessary to execute the CS distance measurement process itself. According to the configuration to which the control flow illustrated in FIG. 14 is applied, it is possible to reduce the possibility of executing the CS distance measurement process in a scene where the portable device 9 exists in a building. Accordingly, power consumption during standby can be further reduced. The standby corresponds to a state where the vehicle Hv is parked. In addition, by reducing the execution frequency of the unnecessary CS distance measurement process, the possibility of unnecessary activation of the main controller 11 and the UWB module 2 can also be reduced.

Of course, the technical ideas described with reference to FIGS. 13 and 14 can be implemented in combination. The BLE controller 123 may be configured to perform the CS distance measurement process on condition that the communication connection with the portable device 9 has been completed, the received signal strength is equal to or greater than a predetermined value, and the variation in the received signal strength is less than the predetermined value. According to this configuration, malfunctions and power consumption of the system can be further reduced.

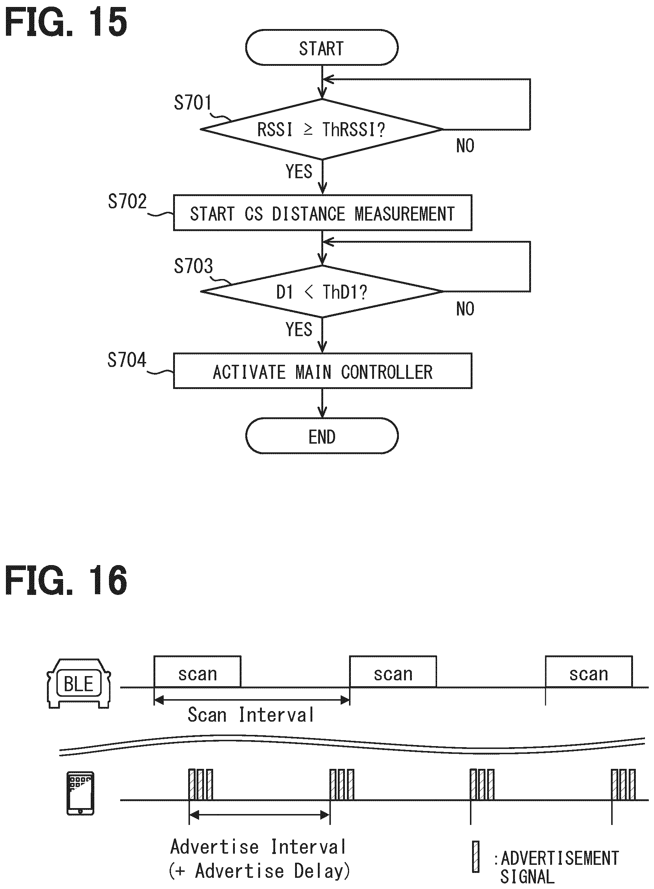

In addition, although the operation example on the assumption that the BLE module 12 is communicably connected to the portable device 9 is described above, the communication connection between the BLE module 12 and the portable device 9 is not essential. As illustrated in FIG. 15, the BLE module 12 may sequentially detect the received signal strength of the BLE signal such as the advertisement signal periodically transmitted from the portable device 9, and execute the CS distance measurement process based on the received signal strength being equal to or greater than the strength threshold value. Steps S701 to S704 illustrated in FIG. 15 correspond to steps S503 to S506 described above. The flowchart illustrated in FIG. 15 can be started based on the main controller 11 being switched from the normal mode to the power saving mode. Step S701 is executed at predetermined intervals while the main controller 11 is in the power saving mode. The first interval may be an advertisement interval.

### (Interaction between portable device and in-vehicle system)

The interaction between the portable device 9 and the in-vehicle system VS for each state of the in-vehicle system VS will be described. In a case where the BLE module 12 starts the CS distance measurement process on condition that the received signal strength is equal to or greater than a predetermined value, the in-vehicle system VS can take the first standby state, the second standby state, the third standby state, and the position determination state as statuses corresponding to the device position.

The first standby state is a state in which communication connection with the portable device 9 is not established. The first standby state corresponds to a situation where the portable device 9 is outside the communication range of the BLE module 12, in other words, a situation where the portable device 9 is sufficiently far from the vehicle Hv. The first standby state can be rephrased as a connection standby state.

In the first standby state, as illustrated in FIG. 16, the portable device 9 transmits the advertisement signal at an interval obtained by adding a random time (so-called advertisement delay) to a predetermined advertisement interval. In addition, the BLE module 12 enters a reception standby state at a predetermined scan interval and searches for a signal from the portable device 9. The size of the scan window corresponding to the length of time for maintaining the reception standby state may be appropriately designed.

The lengths of the scan interval and the advertisement interval can also be set to various values. The values of the various intervals are preferably set to values at which it is possible to quickly establish connection when the user approaches the vehicle Hv. The advertisement interval may be set to a value from 20 milliseconds to 400 milliseconds, such as 37.5 milliseconds, 50 milliseconds, 80 milliseconds, 100 milliseconds, or the like. Of course, the advertising interval may be set to a value exceeding 400 milliseconds within a range conforming to the BLE standard. The advertisement interval may be set to be shorter than the scan interval.

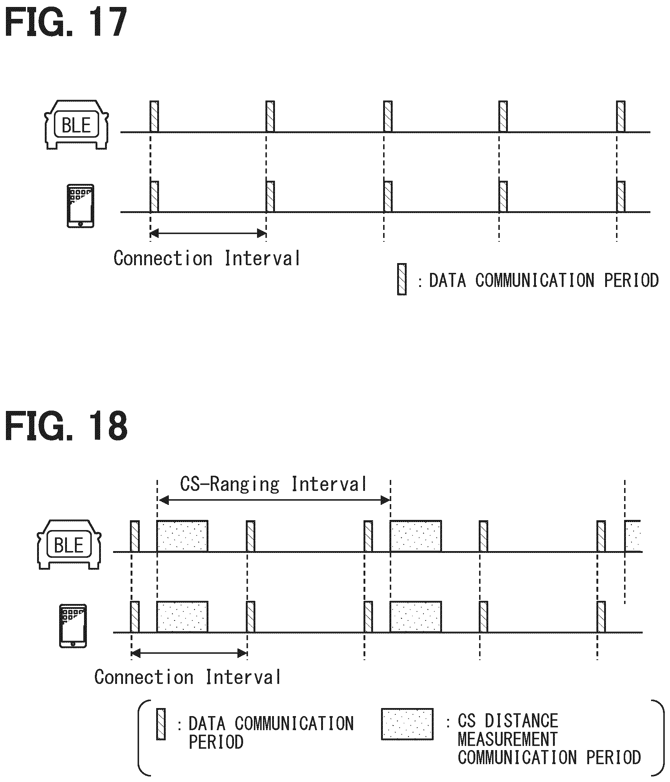

The second standby state is a state in which the portable device 9 and the BLE module 12 are already connected for communication and the received signal strength is less than the strength threshold value. The second standby state can be rephrased as a strength determination state. In the second standby state, the BLE module 12 does not perform CS distance measurement communication. In the second standby state, as illustrated in FIG. 17, the portable device 9 and the BLE module 12 periodically perform data communication at a predetermined connection interval. The communication content may be various content such as communication confirmation. The connection interval may be set to a value from 7.5 milliseconds to 200 milliseconds, such as 30 milliseconds or 40 milliseconds. The connection interval may also be set to a value exceeding 200 milliseconds within a range conforming to the BLE standard.

The third standby state corresponds to a state in which the portable device 9 and the BLE module 12 are already connected for communication, the received signal strength is less than the strength threshold value, and the device distance is equal to or greater than the activation distance. In the third standby state, the portable device 9 and the BLE module 12 periodically perform data communication at a predetermined connection interval, and also periodically perform communication for CS distance measurement. The third standby state can be rephrased as a distance determination state.

The CS distance measurement interval, which is an interval during which the BLE module 12 executes the CS distance measurement communication, may be set to twice or three times the connection interval. The CS distance measurement interval is also referred to as CS ranging interval. The CS distance measurement interval is preferably set longer than the connection interval as illustrated in FIG. 18. By making the CS distance measurement interval longer than the regular data communication execution interval, the effect of further suppressing power consumption can be expected. The CS distance measurement interval corresponds to the second interval. "CS-Ranging Interval" in FIG. 18 indicates the CS distance measurement interval. Transmission and reception of the CW signal at multiple frequencies can be performed in one CS distance measurement communication. One CS distance measurement communication may transmit and receive a CW signal at one frequency. The time for one CS distance measurement communication can be adjusted by the length of the CW signal (tone).

In the first, second, and third standby states, the main controller 11 and the UWB module 2 maintain the sleep state. As described with reference to FIG. 9, in the configuration in which the received signal strength information is not used for the activation determination for the main controller 11 or the like, the second standby state is omitted, and transition from the first standby state (connection standby state) to the third standby state (distance determination state) can be performed.

The position determination state is a state in which the main controller 11 periodically performs the cyclic measurement process. The position determination state corresponds to a state in which the portable device 9 exists within the activation distance from the vehicle Hv (actually, the BLE module 12). In the position determination state, the main controller 11 and the UWB module 2 are activated. In the position determination state, the in-vehicle system VS periodically performs data communication using BLE and distance measurement communication using UWB with the portable device 9. The position determination state can be rephrased as a system operation state.

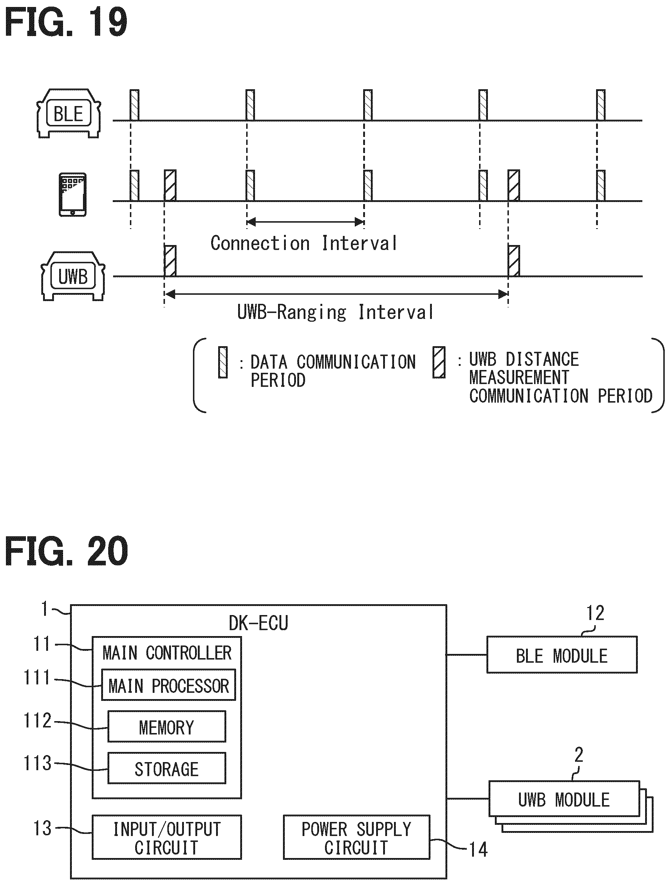

The UWB distance measurement interval, which is an interval during which the main controller 11 causes the UWB module 2 to execute the UWB distance measurement communication, may be set to three times, four times, or the like the connection interval. The UWB distance measurement interval is preferably set longer than the connection interval as illustrated in FIG. 19. By increasing the UWB distance measurement interval, an effect of further suppressing power consumption can be expected. "UWB-Ranging Interval" in FIG. 19 indicates the UWB distance measurement interval. One UWB distance measurement communication may include UWB distance measurement communication in multiple UWB modules 2. In other words, one UWB distance measurement communication illustrated in FIG. 19 may be communication corresponding to the cyclic measurement process. The UWB distance measurement interval can also be rephrased as a cyclic measurement interval. The UWB distance measurement interval may be set to a value from 150 milliseconds to 400 milliseconds, such as 180 milliseconds, 280 milliseconds, or the like. The UWB distance measurement interval may be longer than the CS distance measurement interval. The UWB distance measurement interval may be equal to or shorter than the CS distance measurement interval.

### (Summary of embodiments)

Signals in the 2.4 GHz band used in BLE are susceptible to reflectors and human bodies. Therefore, even when the distance is constant, the received signal strength tends to vary depending on how the user holds the portable device 9 or the surrounding environment. The developers of the present disclosure have studied, as a comparative configuration, a configuration in which the main controller 11 or the like is activated when the received signal strength is a predetermined value or more without using the first distance. The threshold value for the received signal strength in the comparative configuration is set to a value corresponding to the received signal strength monitored in a situation where the device distance in the ideal environment is 5.5 m. The description of the main controller 11 and the like means the main controller 11 and the UWB module 2.

As a result of performing an operation test of the system in the above comparative configuration, in a state where the user holds the portable device 9 in the hand, the main controller 11 and the like may be activated even when the device distance is 10 m. In addition, in a state where the user puts the portable device 9 in the back pocket, the main controller 11 and the like may not be activated until the device distance is 2.4 m. As described above, in the comparative configuration, there is a variation in the area in which the main controller 11 and the like are activated. When the main controller 11 is activated even in a case where the portable device 9 is far from the vehicle, the dark current increases. In addition, in a configuration in which the main controller 11 is activated only after the portable device 9 approaches the vicinity of the vehicle Hv, the convenience of the user may be impaired.

In contrast to such a comparative configuration, in the above configuration, whether to activate the main controller 11 is decided based on the first distance decided based on the propagation time of the signal from the portable device 9 instead of the received signal strength. The first distance decided according to the propagation time of the signal has a smaller distance measurement error due to the communication environment than the received signal strength. In other words, variations in distance measurement from the vehicle Hv to the portable device 9 are reduced. According to such a configuration of the present embodiment, it is possible to reduce the possibility of unnecessarily activating the main controller 11 even though the portable device 9 does not actually exist near the vehicle Hv. As a result, current consumption during standby can be reduced. In addition, according to the configuration of the present embodiment, since it is possible to reduce variations in areas in which the main controller 11 and the like are activated, the system operation can also be stabilized. As a result, it is possible to reduce the possibility of confusing the user due to a malfunction of the system or a system operation delay.

In the above configuration, the UWB module 2 is also activated after the main controller 11 is activated. In other words, while the main controller 11 is in the power saving mode, the UWB module 2 stops operating. The UWB module 2 may also remain deactivated until the first distance is less than the activation distance. Therefore, since the activation frequency of the UWB module 2 can be reduced, the power consumption can be further reduced. The above configuration can also be understood as a configuration in which the UWB module 2 is switched to a communicable state based on the first distance monitored by the BLE module 12 being less than the predetermined value.

Although the configuration in which the BLE module 12 indirectly activates the UWB module 2 is described above, the present invention is not limited thereto. The BLE module 12 may transmit the activation signal to the UWB module 2 based on the CS distance measurement result being less than the activation distance. The activation order of the main controller 11 and the UWB module 2 may be reversed. The BLE module 12 may activate some or all of the UWB modules 2 based on the CS distance measurement result being less than the activation distance. The UWB module 2 or the BLE module 12 may start the main controller 11 based on the distance measurement result in at least one UWB module 2 being less than the predetermined value.

After the activation, the main controller 11 may execute the welcome control such as lighting of the welcome light and the operation of the air conditioner in cooperation with the body ECU 3. This configuration corresponds to a system in which the main controller 11 executes the welcome control based on the first distance measured by the CS distance measurement by the BLE module 12 being less than the activation distance. As described above, the first distance decided by the CS distance measurement represents the device distance with higher accuracy than the received signal strength. Therefore, according to the configuration in which the welcome control is executed based on the first distance being less than the predetermined value, the possibility of unnecessarily executing the welcome control can be reduced as compared with the configuration in which the welcome control is executed based on the received signal strength being equal to or greater than the predetermined value. Various devices such as the main controller 11 and the UWB module can be the target device. The target device may be the body ECU 3 or the like.

### (First modification of system configuration)

In the above-described embodiment, the configuration in which the BLE module 12 is disposed in the housing of the DK-ECU 1 is described, but the present invention is not limited thereto. As illustrated in FIG. 20, the BLE module 12 may be disposed outside the housing of the DK-ECU 1. The BLE module 12 disposed outside the housing operates to activate the DK-ECU 1 based on the CS distance measurement result being less than the activation distance. In FIG. 20, illustration of the body ECU 3 and the like is omitted.

### (Second modification of system configuration)

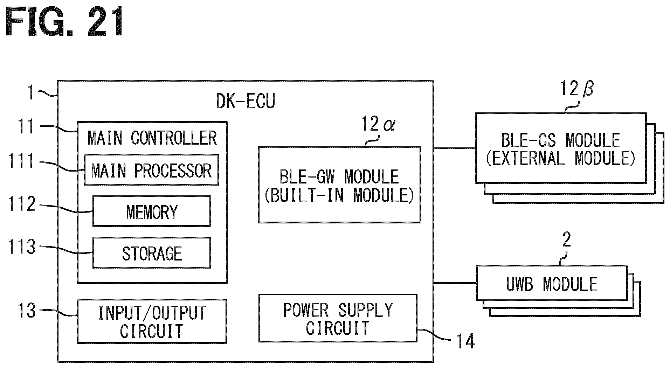

The in-vehicle system VS may include a distance measurement module 12β as a BLE module in addition to a gateway module 12α. As described above, the gateway module 12α is a BLE module that communicates with the portable device 9 even while the main controller 11 is in the power saving mode, and plays a role of activating the main controller 11 based on the CS distance measurement result. The gateway module 12α has a configuration corresponding to the BLE module 12 described above. "BLE-GW' in FIG. 21 indicates a module that functions as the gateway module 12α among the in-vehicle modules that perform BLE communication. "GW' is an abbreviation for gateway. The expression "gateway module" can be replaced with "representative module", "BLE-GW module", or the like. In FIG. 21, illustration of the body ECU 3 and the like is omitted.

The distance measurement module 12β is a BLE module that functions as an anchor. The distance measurement module 12β performs the CS distance measurement process based on an instruction from the main controller 11. "BLE-CS" in FIG. 21 indicates a module for CS distance measurement among the in-vehicle BLE modules. The expression "distance measurement module" can be replaced with "BLE-CS module", "BLE anchor", "CS anchor", or the like. The distance measurement module 12β may be a distance measurement dedicated BLE module. The distance measurement module 12β may be a BLE module used only for distance measurement and received signal strength measurement. Furthermore, the distance measurement module 12β may temporarily perform data communication with the portable device 9 while mainly performing distance measurement.

The distance measurement module 12β stops the operation while the main controller 11 is in the power saving mode. As another aspect, the distance measurement module 12β may be configured to be intermittently activated and perform the CS distance measurement process even while the main controller 11 is in the power saving mode. The distance measurement module 12β may be activated at a timing when the gateway module 12α performs the CS distance measurement process, intercepting (sniffering/sniffing) the CW signal transmitted from the portable device 9, and detect the reception phase for each frequency.

Sniffing/sniffing is a technique in which the BLE modules other than the gateway module 12α intercepts communication between the portable device 9 and the gateway module 12α using channel information provided from the gateway module 12α. The channel information is information (thereafter, channel information) indicating a channel used for data communication between the gateway module 12α and the portable device 9. The channel information may be a specific channel number or a parameter (so-called hop increment) indicating a transition rule of a use channel. The channel information preferably includes a current use channel number and a hop increment. The channel information may be developed in each of the distance measurement modules 12β via the main controller 11. Further, the channel information may be developed in each of the distance measurement modules 12β from the gateway module 12α directly, in other words, without passing through the main controller 11. The BLE module other than the gateway module 12α is the distance measurement module 12β.

In the BLE, since frequency hopping is performed after communication connection, normally, only the gateway module 12α connected for communication can capture the data signal from the portable device 9. On the other hand, according to the sniffering technology, since the channel information is developed in each of the distance measurement modules 12β, the distance measurement module 12β can also capture the data signal from the portable device 9. This is because by referring to the channel information, the distance measurement module 12β can recognize that which channel among a large number of channels usable in the BLE is received makes it possible to receive a signal from the portable device 9. As a result, the distance measurement module 12β can detect the received signal strength, the reception phase, the reception time, and the like of the signal from the portable device 9 without communication connection. Therefore, according to the configuration to which the sniffering technology is applied, there is an advantage that multiple BLE modules can the perform CS distance measurement process in parallel.

In the present disclosure, the BLE module disposed inside the housing of the DK-ECU 1 is referred to as a built-in module, and the BLE module provided outside the housing is referred to as an external module. FIG. 21 illustrates a case where the built-in module functions as the gateway module 12α, but the present invention is not limited thereto. As described above, the gateway module 12α may be an external module.

FIG. 21 illustrates a configuration in which multiple external modules as the distance measurement module 12β is connected to the DK-ECU 1. The plurality of distance measurement modules 12β can be dispersedly disposed on some or all of the right face portion, the left face portion, the rear end portion, and the front end portion of the vehicle Hv. The place where the BLE module is disposed at the vehicle side face portion may be a B pillar, a C pillar, a side mirror, a door handle, a side sill, a roof edge portion, or the like. The place where the BLE module is disposed at the vehicle rear end may be the inside of the rear bumper, the vicinity of the number plate, the upper end/lower end of the rear glass, the trunk door handle, or the like. The place where the BLE module is disposed at the vehicle front end may be in the inside of the front bumper, the front grille, the upper end/lower end of the windshield, or the like. Of course, the in-vehicle system VS may include only one distance measurement module 12β.

When the in-vehicle system VS includes the plurality of distance measurement modules 12β, the position determination unit G2 may determine the device position using the CS distance measurement results in the plurality of distance measurement modules 12β. That is, the plurality of UWB modules 2 may be omitted. The second communication unit may be the distance measurement module 12β. In addition, the position determination unit G2 may determine the device position using the CS distance measurement results in the plurality of distance measurement modules 12β and the UWB distance measurement results in the plurality of UWB modules.

Furthermore, the position determination unit G2 may specify a schematic device position or device existing direction using the CS distance measurement results in the plurality of distance measurement modules 12β and set an unnecessary anchor based on the specifying result. According to this configuration, it is possible to suppress the number of UWB modules 2 operating after activation of the main controller 11.

### (Supplement to method of acquiring single frequency phase difference)

The BLE module 12 may acquire the single frequency phase difference for each frequency by the active 2-way method or the passive 2-way method, and calculate the inter-frequency phase difference using the single frequency phase difference. An outline of the active two-way method and the passive two-way method will be described.

The active two-way method is a method in which an initiator and a reflector mutually transmit and receive a CW signal to detect a phase difference between a transmission signal and a received signal, and a single frequency phase difference is specified using the two phase differences. The active two-way method includes a process in which the initiator and the reflector transmit and receive the CW signal to and from each other, and a process in which a reception phase (θr) monitored by the reflector is transmitted toward the initiator.

The initiator is a device that initiates communication, in other words, a device that requests a response. In addition, the reflector is a device that returns a response. In the above embodiment, the BLE module 12 corresponds to an initiator, and the portable device 9 corresponds to a reflector.

A relationship of θr=φ+δi-δr and θi=φ-δi+δr is satisfied where δi is an initial phase of the initiator, δr is an initial phase of the reflector, φ is a single frequency phase difference to be originally monitored according to a one-way distance between the initiator and the reflector, and f is a target frequency. Based on the relational expression, the average value of θi and θr is a single frequency phase difference (φ) in which the initial phase components of the initiator and the reflector are canceled out. The active two-way method corresponds to a method of calculating an average value of the reception phase at the initiator and the reception phase at the reflector as a single frequency phase difference. Since a phase difference due to one-way propagation is assumed, an average value of θi and θr is set as a single frequency phase difference. As another aspect, in a case where a phase difference due to reciprocating propagation is assumed as the single frequency phase difference, the single frequency phase difference can be obtained by θi+θr.

The passive two-way method is also a method in which the initiator and the reflector transmit and receive the CW signal to and from each other. The difference from the active two-way method is that the reflector reflects the reception phase of the CW signal transmitted from the initiator on the initial phase of the transmission signal to transmit the signal. When the reception phase at the reflector is θr, a CW signal expressed by z(t) =A·exp{-i(ωt+θr+2πn)} is transmitted. A represents an amplitude. ω is an angular frequency corresponding to the target frequency (f), and has a relationship of ω=2πf. n is a natural number and corresponds to an interval from when the reflector receives the CW signal to when the reflector transmits the CW signal. According to this method, the reception phase monitored by the initiator does not include the initial phase component of the reflector. The reception phase monitored by the initiator has the value same as that in a case where the CW signal reflected by a reflection object such as a wall and returned is received. As a result, the initiator can calculate the single frequency phase difference without acquiring the reception phase from the reflector. The passive two-way method has an advantage that the reflector does not need to transmit the reception phase message, as compared with the active two-way method. As described above, the single frequency phase difference and the inter-frequency phase difference can be executed in various methods.

### (Modification of CS distance measurement)

The **BLE** controller 123 may calculate the first distance using the **RTT** instead of/in combination with the inter-frequency phase difference. The **RTT** measured by the **BLE** controller 123 is a time from when transmitting a predetermined **BLE** signal requesting a response to when receiving a response signal from the portable device 9. The **RTT** also corresponds to the distance-related value. Transmission and reception of a signal for measuring **RTT** also corresponds to an example of CS distance measurement communication. Calculating the phase change coefficient or the **RTT** substantially corresponds to calculating the device distance. Therefore, a process of generating data indicating the device distance such as the phase change coefficient or the **RTT** based on the phase, the flight time, or the arrival time of the signal received from the portable device 9 is also included in the concept of the first distance measurement process. Calculating the distance also includes generating data indirectly indicating the distance.

### (Object to which the present disclosure is applied)

The above embodiment is applicable to various vehicles traveling on a road. That is, the present disclosure can be applied to various vehicles that can travel on a road, such as a two-wheeled vehicle and a three-wheeled vehicle, in addition to a four-wheeled vehicle. A motorized bicycle can also be included in a two-wheeled vehicle.

The in-vehicle system VS may be configured such that multiple in-vehicle BLE modules operates as master devices (masters) of the portable device 9 by a multipoint technology. Further, multiple in-vehicle BLE modules may be configured to operate as slave devices (slaves) of the portable device 9.

The communication method between the BLE module 12 and the portable device 9 is not limited to BLE, and may be Bluetooth Classic or the like. The wireless communication conforming to Bluetooth includes both communication conforming to Bluetooth Low Energy and communication conforming to Bluetooth Classic.

The communication standard used for distance measurement communication after activation of the main controller 11 is not limited to BLE or UWB, but may be Wi-Fi (registered trademark), EnOcean (registered trademark), Zigbee (registered trademark), or the like. In other words, the second communication unit may be a communication module conforming to Wi-Fi or the like.

### (Additional Note 1)

The present disclosure includes the following technical ideas.

### (Technical Idea 1)

A position determination device, which determines a position of a portable device relative to a vehicle, includes: a first communication unit (12) that performs wireless communication conforming to Bluetooth (registered trademark) with the portable device; and a computer (11) that executes a process of determining the position of the portable device. The computer has, as operation states, a normal mode and a power saving mode. The first communication unit is set to maintain a communicable state with the portable device even while the computer operates in the power saving mode. The first communication unit executes a first distance measurement process of calculating a first distance, which is a distance from the first communication unit to the portable device, using data related to a reception phase, a flight time, or an arrival time of a wireless signal transmitted from the portable device. The first communication unit compares the first distance obtained as a result of the first distance measurement process with a predetermined value and outputs a comparison result. The computer switches from the power saving mode to the normal mode based on the comparison result.

### (Technical Idea 2)

The position determination device according to technical idea 1 is used in a connected state with a second communication unit, which is disposed in the vehicle and capable of wirelessly communicating with the portable device. The computer activates the second communication unit in response to the operation state returning from the power saving mode to the normal mode, controls the second communication unit to perform a second distance measurement process of calculating a second distance, which is a distance from the second communication unit to the portable device, using the data related to the reception phase, the flight time, or the arrival time of the wireless signal transmitted from the portable device, and determines the position of the portable device based on the second distance obtained as a calculation result of the second distance measurement process.

### (Technical Idea 3)

In the position determination device according to technical idea 2, the second communication unit is provided by a communication module that performs ultra-wideband (UWB) communication. The second distance measurement process includes measuring the flight time of the wireless signal by transmitting and receiving an impulse signal, which is used in the UWB communication with the portable device, and calculating the second distance based on the measured flight time. The second communication unit performs the second distance measurement process in response to an instruction from the computer.

### (Technical Idea 4)

In the position determination device according to technical idea 2 or 3, the computer controls the first communication unit to perform the first distance measurement process even after switching to the normal mode, and determines the position of the portable device based on the first distance and the second distance.

### (Technical Idea 5)

The position determination device according to any one of technical ideas 2 to 4 is used in a connected state with a plurality of the second communication units. The computer acquires the second distance from each of the plurality of second communication units, determines the position of the portable device based on the second distance acquired from each of the plurality of second communication units, and controls a part of the plurality of second communication units to stop operation according to the determined position of the portable device.

### (Technical Idea 6)

The plurality of second communication units include a right communication unit (2B) disposed on right side of the vehicle and a left communication unit (2C) disposed on left side of the vehicle. In the position determination device according to technical idea 5, the computer controls the left communication unit to stop operation in response to the computer determining that the position of the portable device is on right side of the vehicle, and controls the right communication unit to stop operation in response to the computer determining that the position of the portable device is on left side of the vehicle.

### (Technical Idea 7)

In the position determination device according to any one of technical ideas 1 to 6, the first communication unit periodically receives the wireless signal from the portable device at a first interval, acquires a received signal strength of the received wireless signal, and executes the first distance measurement process when a monitoring value of the received signal strength is equal to or greater than a predetermined strength threshold value.

### (Technical Idea 8)

In the position determination device according to technical idea 7, the first communication unit compares the monitoring value of the received signal strength with the predetermined strength threshold value and outputs a comparison result and periodically executes the first distance measurement process at a second interval based on the comparison result. The second interval is set to be longer than the first interval.

### (Technical Idea 9)

In the position determination device according to technical idea 7 or 8, the first communication unit intermittently transmits or scans a signal for establishing a communication connection with the portable device in a case where the computer operates in the power saving mode and a communication connection has not yet established between the first communication unit and the portable device, and starts periodic data signal reception or periodic data signal transmission in response to the communication connection being established between the first communication unit and the portable device.

### (Technical Idea 10)

In the position determination device according to any one of technical ideas 7 to 9, the first communication unit stores the monitoring value of the received signal strength in a memory, and performs the first distance measurement process in response to a degree of variation in the received signal strength within a certain period of time being less than a predetermined value.

### (Technical Idea 11)

In the position determination device according to ay one of technical ideas 2 to 10, the computer controls the first communication unit to stop the first distance measurement process in response to activation of the second communication unit.

### (Additional Note 2)

Each of the various flowcharts illustrated in the present disclosure is an example, and the number of steps constituting the flowchart and the execution order of the processing can be appropriately changed. The descriptions of the wireless signal/BLE signal/data/message/packet/frame/package/data set/information, and the like in the present disclosure may be read as each other.

The device, the system, and the method thereof described in the present disclosure may be implemented by a dedicated computer constituting a processor programmed to execute one or multiple functions embodied by a computer program. The device and the method thereof described in the present disclosure may be implemented by using a dedicated hardware logic circuit. The device and the method thereof described in the present disclosure may be implemented by one or more dedicated computers configured by a combination of a processor that executes a computer program and one or more hardware logic circuits. Some or all of the functions of the BLE controller 123 may be implemented by hardware circuits. An aspect in which a certain function is implemented as hardware circuits includes an aspect in which the function is implemented by using one or more ICs or the like. In addition to the CPU, the processor (arithmetic core) may be an MPU, a GPU, a data flow processor (DFP), or the like. Some or all of the functions of the BLE controller 123 may be implemented by using any of a system-on-chip (SoC), an integrated circuit (IC), and a field-programmable gate array (FPGA). The concept of IC also includes an application specific integrated circuit (ASIC). In addition, the computer program may be stored in a computer-readable non-transitory tangible storage medium as an instruction executed by a computer. The storage medium of the program may be a hard disk drive (HDD), a solid state drive (SSD), a flash memory, or the like. In the present disclosure, a program for causing a computer to function as the BLE controller 123 or the main controller 11, and a form of a non-transitory tangible storage medium such as a semiconductor memory in which the program is recorded are also included in the scope of the present disclosure.

## Claims

1. A position determination device that determines a position of a portable device relative to a vehicle, the position determination device comprising:
a first communication unit (12) that performs wireless communication conforming to Bluetooth (registered trademark) with the portable device; and
a computer (11) that executes a process of determining the position of the portable device,
wherein
the computer has, as operation states, a normal mode and a power saving mode,
the first communication unit is set to maintain a communicable state with the portable device even while the computer operates in the power saving mode,
the first communication unit executes a first distance measurement process of calculating a first distance, which is a distance from the first communication unit to the portable device, using data related to a reception phase, a flight time, or an arrival time of a wireless signal transmitted from the portable device,
the first communication unit compares the first distance obtained as a result of the first distance measurement process with a predetermined value and outputs a comparison result, and
the computer switches from the power saving mode to the normal mode based on the comparison result.

2. The position determination device according to claim 1, wherein
the position determination device is used in a connected state with a second communication unit (2), which is disposed in the vehicle and capable of wirelessly communicating with the portable device, and
the computer
activates the second communication unit in response to the operation state switching from the power saving mode to the normal mode,
controls the second communication unit to perform a second distance measurement process of calculating a second distance, which is a distance from the second communication unit to the portable device, using data related to a reception phase, a flight time, or an arrival time of a different wireless signal transmitted from the portable device, and
determines the position of the portable device based on the second distance obtained as a calculation result of the second distance measurement process.

3. The position determination device according to claim 2, wherein
the second communication unit is provided by a communication module that performs ultra-wideband (UWB) communication,
the second distance measurement process includes measuring the flight time of the different wireless signal by transmitting and receiving an impulse signal, which is used in the UWB communication between the second communication unit and the portable device, and calculating the second distance based on the measured flight time, and
the second communication unit performs the second distance measurement process in response to an instruction output from the computer.

4. The position determination device according to claim 2 or 3, wherein
the computer
controls the first communication unit to perform the first distance measurement process even after switching to the normal mode, and
determines the position of the portable device based on the first distance and the second distance.

5. The position determination device according to claim 2, wherein
the position determination device is used in a connected state with a plurality of the second communication units, and
the computer
acquires the second distance from each of the plurality of second communication units,
determines the position of the portable device based on the second distance acquired from each of the plurality of second communication units, and
controls a part of the plurality of second communication units to stop operation according to the determined position of the portable device.

6. The position determination device according to claim 5, wherein
the plurality of second communication units include a right communication unit (2B) disposed on right side of the vehicle and a left communication unit (2C) disposed on left side of the vehicle, and
the computer
controls the left communication unit to stop operation in response to the computer determining that the position of the portable device is on right side of the vehicle, and
controls the right communication unit to stop operation in response to the computer determining that the position of the portable device is on left side of the vehicle.

7. The position determination device according to claim 1, wherein
the first communication unit
periodically receives the wireless signal from the portable device at a first interval,
acquires a received signal strength of the received wireless signal, and
executes the first distance measurement process when a monitoring value of the received signal strength is equal to or greater than a predetermined strength threshold value.

8. The position determination device according to claim 7, wherein
the first communication unit
compares the monitoring value of the received signal strength with the predetermined strength threshold value, and
periodically executes the first distance measurement process based on a result of comparison between the monitoring value of the received signal strength and the predetermined strength threshold value, at a second interval, which is set to be longer than the first interval.

9. The position determination device according to claim 7, wherein
the first communication unit
intermittently transmits or scans a signal for establishing a communication connection with the portable device in a case where the computer operates in the power saving mode and a communication connection has not yet been established between the first communication unit and the portable device, and
starts periodic data signal reception or periodic data signal transmission in response to the communication connection being established between the first communication unit and the portable device.

10. The position determination device according to claim 7, wherein
the first communication unit
stores the monitoring value of the received signal strength in a memory, and
performs the first distance measurement process in response to a degree of variation in the received signal strength within a certain period of time being less than a predetermined value.

11. The position determination device according to claim 2, wherein
the computer controls the first communication unit to stop the first distance measurement process in response to activation of the second communication unit.

12. A position determination system comprising:
a first communication unit (12) that performs wireless communication conforming to Bluetooth with a portable device; and
a computer (11) that executes a process of determining a position of the portable device,
wherein
the computer has, as operation states, a normal mode and a power saving mode,
the first communication unit executes a first distance measurement process of calculating a first distance, which is a distance from the first communication unit to the portable device, using a reception phase, a flight time, or an arrival time of a wireless signal transmitted from the portable device in a case where the computer operates in the power saving mode,
the first communication unit compares the first distance obtained as a result of the first distance measurement process with a predetermined value and outputs a comparison result, and
the computer switches from the power saving mode to the normal mode based on the comparison result.

13. The position determination system according to claim 12, further comprising
a plurality of second communication units (2) disposed at different positions of a vehicle and capable of wirelessly communicating with the portable device,
wherein
the computer
activates each of the plurality of second communication units in response to switching from the power saving mode to the normal mode, and
instructs each of the plurality of second communication units to perform a second distance measurement process of calculating a second distance, which is a distance from each of the plurality of second communication units to the portable device, using data related to a reception phase, a flight time, or an arrival time of a different wireless signal transmitted from the portable device,
each of the plurality of second communication units
performs the second distance measurement process in response to an instruction output from the computer,
generates position related data indicating a position where the portable device is present based on the second distance calculated by the second distance measurement process, and
transmits the generated position related data to the computer, and
the computer determines the position of the portable device by integrating the position related data received from each of the plurality of second communication units.

14. A wireless communication module performing wireless communication conforming to Bluetooth with a portable device, the wireless communication module comprising:
an antenna (121) performing communication with the portable device; and
a communication controller (123) acquiring data related to a reception phase, a flight time, or an arrival time of a wireless signal transmitted from the portable device based on a signal received by the antenna,
wherein
the communication controller
maintains a communicable state with the portable device while a vehicle is in a parked state using a power supplied from a battery mounted on the vehicle,
while the vehicle is in the parked state, executes a first distance measurement process of calculating a first distance, which is a distance from the communication controller to the portable device, using the data related to the reception phase, the flight time, or the arrival time of the wireless signal,
compares the first distance obtained as a result of the first distance measurement process with a predetermined value and outputs a comparison result, and
outputs a signal for switching a predetermined target device mounted on the vehicle from a power saving mode to a normal mode based on the comparison result.

15. A computer program comprising instructions to be executed by a processor (901) of a portable device (9), the portable device including a Bluetooth communication unit (93) for performing wireless communication conforming to Bluetooth and an ultra-wideband (UWB) communication unit (94) for performing UWB communication, the instructions comprising:
establishing a Bluetooth communication connection with a vehicle in response to receiving a signal transmitted from the vehicle, wherein the vehicle is associated with the portable device in advance;
in response to receiving a start request of a first distance measurement process from the vehicle, returning a signal for the first distance measurement process to the vehicle, wherein the first distance measurement process is a distance measurement process using Bluetooth communication;
sequentially transmitting, to the vehicle, continuous wave signals having different frequencies after returning the signal for the first distance measurement process;
activating the UWB communication unit in response to receiving a start request of a second distance measurement process from the vehicle, wherein the second distance measurement process is a distance measurement process using UWB communication; and
in response to receiving a UWB signal for distance measurement purpose from the vehicle, returning a UWB signal having a predetermined pattern to the vehicle.
